# EUROPÄISCHE PATENTSCHRIFT

(11) **EP 3 658 325 B1**
(45) Veröffentlichungstag und Bekanntmachung des Hinweises auf die Patenterteilung: **07.09.2022**
(21) Anmeldenummer: 18755126.2
(22) Anmeldetag: 23.07.2018
(51) Int. Cl.: B23K 9/173, B23K 9/26, B23K 9/29, B23K 9/32

(54) **AUSTAUSCHBARES VERSCHLEISSTEIL FÜR EINEN LICHTBOGENSCHWEISSBRENNER, HALTERUNG FÜR EIN AUSTAUSCHBARES VERSCHLEISSTEIL, UND EIN LICHTBOGEN-SCHWEISSBRENNER MIT SOLCHEN ENTSPRECHENDEN VERSCHLEISSTEIL UND HALTERUNG**
EXCHANGEABLE WEARING PART FOR AN ARC WELDING TORCH, HOLDER FOR AN EXCHANGEABLE WEARING PART, AND AN ARC WELDING TORCH HAVING SUCH A CORRESPONDING WEARING PART AND HOLDER
PIÈCE D'USURE ÉCHANGEABLE POUR UN CHALUMEAU DE SOUDURE À L'ARC, SUPPORT POUR PIÈCE D'USURE ÉCHANGEABLE, ET CHALUMEAU DE SOUDURE À L'ARC AVEC UNE TELLE PIÈCE D'USURE CORRESPONDANTE ET SUPPORT

(30) Priorität: 24.07.2017 DE 102017006919
(43) Veröffentlichungstag der Anmeldung: 03.06.2020
(73) Patentinhaber: SKS Welding Systems GmbH, 67661 Kaiserslautern (DE)
(72) Erfinder: KLEIN, Thomas, 67688 Rodenbach (DE)
(74) Vertreter: Klein, Friedrich Jürgen
(86) Internationale Anmeldenummer: PCT/EP2018/000366
(87) Internationale Veröffentlichungsnummer: WO 2019/020211

(56) Entgegenhaltungen:
- US-A- 4 024 374
- US-A- 4 492 850
- US-A1- 2014 312 023
- US-A1- 2015 217 380

## Beschreibung

Die Erfindung betrifft ein austauschbares Verschleißteil eines Lichtbogen-Schweißbrenners, das insbesondere zur Anordnung im Bereich des schweißprozeßnahen Endes des Lichtbogen-Schweißbrenners, vorgesehen ist, wobei das Verschleißteil eine vorzugsweise zentrische Ausnehmung, entweder zur Anordnung eines weiteren austauschbaren Verschleißteils und/oder zur Aufnahme einer Elektrode und/oder zur Durchleitung von Schutzgas aufweist, und eine äußere Hüllfläche oder eine Begrenzungswand der Ausnehmung des Verschleißteils mit einem konusförmigen Abschnitt versehen ist, der ein Gewinde aufweist.

Es existiert eine Vielzahl von unterschiedlichen Schweißverfahren. Die vorliegende Erfindung hat besondere Bedeutung für das Lichtbogenschweißen. Dieses basiert auf einer Hitzeentwicklung eines elektrischen Lichtbogens zwischen einer Schweißelektrode und einem Werkstück, an dem eine Schweißung vorgenommen werden soll. Durch die Hitzeentwicklung kann der bzw. können die zu schweißenden Werkstoffe lokal aufgeschmolzen werden. Bei nahezu sämtlichen Lichtbogenschweißverfahren wird dem Bereich des Lichtbogens hierzu ein Schutzgas zugeführt, um einerseits eine widerstandssenkende ionisierte Atmosphäre zwischen der Schweißelektrode und dem Werkstück zu ermöglichen und um andererseits eine Oxidation der Schweißelektrode und des Werkstücks zu verhindern. Anstelle eines hierbei als Schutzgas vorgesehenen Inertgases kann auch ein Aktivgas oder eine Mischform zugeführt werden, das zur Reaktion dient. Ebenso können Elektroden vorgesehen sein, die keine externe Gaszuführung benötigen, da die hierfür erforderlichen Substanzen in den Elektroden integriert sind und beim Abschmelzen der Elektroden freigesetzt werden.

Ein Lichtbogen-Schweißbrenner ist üblicherweise derart ausgelegt, daß ein Benutzer oder ein Roboter einen Metallschweißdraht, der auch als Metallzusatzwerkstoff bezeichnet werden kann, auf eine spezifizierte Fügestelle auf dem Zielmetallstück richten kann. Der Schweißdraht wird durch den Schweißbrenner geführt und schließlich durch eine Öffnung in der Kontaktdüse am Ende des Schweißbrenners zum Zielmetallstück transportiert.

Bei Anlegen einer elektrischen Spannung am Schweißbrennerinnenrohr und beim Kontaktieren des Schweißdrahtes mit dem Zielmetallstück, fließt ein hoher elektrischer Strom von einem Schweißbrennerinnenrohr über einen sogenannten Düsenstock, dann über die Kontaktdüse, über den Schweißdraht und gegebenenfalls einem Lichtbogen zum Zielmetallstück und dann zur Masse. Der hohe Strom und der Lichtbogen verursachen das Schmelzen des Schweißdrahtes in einer Schutzgasatmosphäre, was zur Tropfenbildung des Drahtes und zum Entstehen eines Lichtbogens führt.

Dieser Lichtbogen schmilzt das Metall der Zielmetallstücke und den nachgeführten Schweißdraht. Durch Abfallen der entstanden Tropfen des Schweißdrahtes oder durch Übergabe des Tropfens im Kurzschluss auf die verflüssigte Stelle der Zielmetallstücke, werden diese miteinander verbunden. Aufgrund des geringen Abstandes von der Kontaktdüse und der Gasdüse zum Lichtbogen bzw. zum aufgeheizten Zielmetallstück werden diese Bauteile stark erwärmt. Durch die hohe thermische Belastung ist vor allem die Kontaktdüse starkem Verschleiß ausgesetzt.

Herkömmliche Brennersysteme bestehen in ihrem Endabschnitt in der Regel im Wesentlichen aus der Kontaktdüse, dem Düsenstock und der äußeren Gasdüse. Diese Bauteile sind am Brennerhals (Außenrohr, Innenrohr) montiert und thermisch bzw. elektrisch über Kontaktflächen, Gewinde miteinander oder mit anderen Bauteilen des Brennerhalses gekoppelt oder auch isoliert. Das Außenrohr muss jedoch von stromführenden anderen Bauteilen elektrisch entkoppelt sein, da dort aus Sicherheitsgründen keine Spannung anliegen darf. Durch die thermische Kopplung der Bauteile wird versucht, die Energie, welche in Form von Wärme in die Kontaktdüse bzw. Gasdüse eingeleitet wird, über das Außenrohr bzw. Innenrohr möglichst wirksam abzuleiten und dadurch die Maximaltemperatur der Kontaktdüse zu senken, um den Verschleiß zu minimieren.

Herkömmliche Kontaktdüsen besitzen eine zumindest im Wesentlichen zylindrische, längliche Form vom vorderen bis hinteren Ende, wobei ein Ende mit einem zylindrischen Außengewinde zur Befestigung an einem Düsenstock ausgebildet ist. US 2014/312023 A1 offenbart die Merkmale des Oberbegriffes der Ansprüche 1, 12, 13, 19, 20 und 21. Durch die DE-AS 2 334 335 ist eine weitere Kontakt- oder Stromdüse bekannt geworden, die anstelle eines zylindrischen Gewindes einen kegeligen, mit einem Gewinde versehenen, Endabschnitt aufweist, welcher als Teil einer Halteeinrichtung zur Anordnung der Kontaktdüse am Brennerhals dient. Als Kontaktfläche zur Strom- bzw. Wärmeübertragung dient in erster Linie die stirnseitige ringkreisförmige Kontaktfläche zwischen Kontaktdüse und Düsenstock. Die dort vorgesehenen Flächen und das Gewinde können bei vorbekannten Lösungen aufgrund ihrer geringen Kontaktflächenanteile zur Übertragung nicht entscheidend beitragen.

Der Düsenstock dient im Allgemeinen unter anderem als Halterung für die Kontaktdüse sowie zur Verteilung des Schutzgases. Er ist üblicherweise mittels Gewinde mit dem Innenrohr verbunden. Der Düsenstock kann außerdem mit einem Bund axial am Innenrohr anstehen. Als Kontaktfläche zur Strom bzw. Wärmeübertragung dient sowohl das Gewinde als auch eine stirnseitige ringkreisförmige Kontaktfläche des Bunds.

Standardmäßig wird die Gasdüse mittels Innengewinde am Außenrohr oder an einem zum Außenrohr gehörenden Bauteil des Brenners befestigt und steht axial an diesem an. Als Übertragungsfläche zur Wärmeabfuhr dient das Gewinde als auch die relativ kleine ringkreisförmige Kontaktfläche zwischen Gasdüse und Außenrohr. Zwischen Gasdüse und Düsenstock befindet sich oftmals ein elektrischer Isolator. Das Gewinde der Gasdüse dient hierbei hauptsächlich als Halteeinrichtung zur Befestigung der Gasdüse am Außenrohr.

Sämtliche vorbekannten Kontaktdüsen, deren Halterungen im Lichtbogen-Schweißbrenner, wie beispielsweise an einem Düsenstock, sowie Gasdüsen, die üblicherweise mittels eines Gewindes austauschbar befestigt werden, weisen den Nachteil auf, daß sie bezüglich der Wärme- und Stromübertragung - soweit sie auch für letzteres vorgesehen sind - auf das jeweils mit ihnen kontaktierte andere Bauteil des Lichtbogen-Schweißbrenners, nicht zufrieden stellen können. Hohe Stromübergangswiderstände sowie ungünstige Wärmeübergänge führen zu hohen Temperaturen in den in der Regel als austauschbare Verschleißteile vorgesehenen Bauteilen. Hohe Temperaturen während der Ausführung eines Schweißprozesses sind wiederum Ursache für zu hohe Wechseltemperaturen zwischen dem Einsatz eines Lichtbogen-Schweißbrenners und Nichteinsatzzeiten, was wiederum oftmals zu einem unbeabsichtigten Lösen der genannten Bauteile führen kann. Dies wiederum kann Ursache für qualitativ minderwertig gefertigte Schweißverbindungen und von Funktionsstörungen von Schweißanlagen sein. Ebenso können hohe Temperaturen zu einem erhöhten Verschleiß dieser Bauteile und damit zu ungünstig kurzen Standzeiten führen. Neben höheren Kosten für die Verschleißteile selbst entstehen zudem höhere Kosten durch erhöhte Betriebsausfallzeiten und häufiger anfallenden Wartungsvorgängen für die Lichtbogen-Schweißbrenner und gegebenenfalls Fertigungsautomaten, mit welchen Lichtbogen-Schweißbrenner betrieben werden.

Der Erfindung liegt deshalb die Aufgabe zugrunde, bei einem Lichtbogen-Schweißbrenner der eingangs genannten Art, bei dem auch lösbar miteinander verbindbare stromführende Bauteile vorgesehen sein können, eine Verbesserung der Wärmeübergangseigenschaften zu erreichen. Soweit solche Bauteile stromführend sind, sollen auch verbesserte Stromübertragungseigenschaften erzielbar sein. Diese Aufgabe wird erfindungsgemäß durch ein austauschbares Verschleißteil mit den Merkmalen von Patentanspruch 1 gelöst. Eine Halterung für einen Lichtbogen-Schweißbrenner, ein Düsenstock-Kontaktdüsensystem für einen Schutzgas-Schweißbrenner und Lichtbogen-Schweißbrenner gemäß der Erfindung sind zudem in den Ansprüchen 12-13 und 19-21 definiert.

Hierbei können die Merkmale Bestandteil der Erfindung nach Anspruch 1 sein, wonach dem ersten, das Gewinde aufweisenden, konus- oder kegelförmigen Abschnitt ein zweiter, gewindefreier, aber ebenfalls konus- oder kegelförmiger Abschnitt der Hüllfläche oder der Begrenzungswand, in Richtung einer Längsachse des jeweiligen Verschleißteils nachfolgt, insbesondere in Richtung auf das freie Ende des Schweißbrenners hin, an dem die Ausführung von Lichtbogen-Schweißvorgängen vorgesehen ist. Der dem gewindebehafteten ersten konus- bzw. kegelförmigen Abschnitt nachfolgende zweite konus- bzw. kegelförmige Abschnitt kann als besonders wirksamer Wärme- und gegebenenfalls Stromübergang zu einem anderen Bauteil des Lichtbogen-Schweißbrenners hin, vorgesehen und wirksam sein. Hierbei können konische Flächen selbst bei üblichen Fertigungsungenauigkeiten immer noch eine große Kontaktfläche bieten, die tatsächlich mit einer zur konusförmigen Fläche des jeweiligen Verschleißteils kongruenten Fläche eines Kontaktpartners sich in Anlage befinden. Durch die vergrößerte Kontaktfläche und Flächenpressung kann ein verbesserter Strom- und Wärmeübergang zwischen den Bauteilen stattfinden, was zu reduzierten Prozeßtemperaturen im Bereich des jeweiligen Verschleißteils sowie gleichzeitig zu einer Erhöhung von dessen Standzeit und zu einer Erhöhung der Funktionssicherheit des Lichtbogen-Schweißbrenners beiträgt. Die Erfindung eignet sich für Lichtbogen-Schweißbrenner jedes Schweißverfahrens, bei dem mittels eines elektrisch gezündeten und aufrecht erhaltenen Lichtbogens die erforderliche Prozeßtemperatur erzeugt wird und zwar unabhängig davon, ob das Schweißverfahren mit einer abschmelzenden Elektrode oder einer nicht abschmelzenden Elektrode ausgeführt wird. Ebenso ist die Erfindung nicht auf Schweißbrenner beschränkt, mit denen der Schweißstelle ein Schutzgas zugeführt wird. Auch bei Lichtbogen-Schweißverfahren, die ohne Schutzgas arbeiten, kann die vorliegende Erfindung zur Anwendung gelangen. Entsprechend einer nicht abschließenden Aufzählung sind insbesondere MIG, MAG, WIG, Plaßmaschweißen, Plaßmaschneiden, Kaltdraht-, WIG/Heißdraht-, Laser/Heißdraht- und Laser/Kaltdraht-Schweißverfahren, mögliche Einsatzgebiete für die vorliegende Erfindung.

In einer bevorzugten Ausführungsform der Erfindung kann vorgesehen sein, daß zwischen dem ersten und dem zweiten konus- bzw. kegelförmigen Abschnitt ein Gewindefreistich mit einem in Bezug auf den gewindefreien konus- bzw. kegelförmigen Abschnitt geringeren Durchmesser vorgesehen ist. Mit einer solchen Lösung kann besonders einfach und auf Drehautomaten in einer Serienfertigung sowohl das Gewinde auf dem ersten konusförmigen Abschnitt als auch der gewindefreie konusförmige zweite Abschnitt von Verschleißteilen gefertigt werden. Verschleißteile mit den erfindungsgemäßen Eigenschaften und Merkmalen lassen sich hierdurch besonders kostengünstig fertigen.

Zu einer hohen Formstabilität des jeweiligen Verschleißteils trägt die Erfindung bei, bei der sich ein gewindefreier zylindrischer Abschnitt mit konstantem Durchmesser der Mantelfläche oder der Begrenzungswand, vorzugsweise in Richtung der Längsachse des Verschleißteils, an den konusförmigen gewindefreien Abschnitt der Mantelfläche oder der Begrenzungswand des Verschleißteils anschließt, so daß sich der gewindefreie konusförmige Abschnitt zwischen dem mit dem Gewinde versehenen konusförmigen Abschnitt und dem zylindrischen Abschnitt befindet. Der zylindrische Abschnitt kann hierbei ähnlich wie ein Ringanker, dem Verschleißteil Formstabilität verleihen.

Des Weiteren kann im Zusammenhang mit der Erfindung bevorzugt sein, daß die beiden konus- bzw. kegelförmigen Abschnitte einen gleichen Konus- bzw. Kegelwinkel, insbesondere einen über ihre gesamte Längserstreckung konstant gleichen, Konus- bzw. Kegelwinkel, aufweisen. Eine solche Ausführungsform der Erfindung läßt sich trotz der damit erzielbaren hohen Funktionssicherheit besonders einfach fertigen. In einer alternativen Ausführungsform der Erfindung können die beiden mit jeweils einem Konus versehenen Abschnitte auch unterschiedliche Konuswinkel aufweisen.

In einer bevorzugten Ausführungsform der Erfindung, kann zumindest einer der beiden konus- bzw. kegelförmigen Abschnitte des Verschleißteils mit einem Konuswinkel versehen sein, der geeignet ist, mit dem Werkstoff eines Kontakpartnerbauteils eine Selbsthemmung zu erzielen. Geeignete Konuswinkel für den gewindebehafteten und/oder den gewindefreien konusförmigen Abschnitt des Verschleißteils, die unterhalb des Reibwinkels liegen, können zur Erzielung dieser selbsthemmenden Eigenschaft vorzugsweise aus einem Winkelbereich von 5° bis 15°, besonders bevorzugt aus einem Winkelbereich von 8° bis 12°, gewählt sein, wobei die Verschleißteile vorzugsweise aus den Werkstoffen Kupfer oder Kupferlegierungen und/oder unter Einsatz von elektrisch leitenden Beschichtungen hergestellt sein können.

Auch die Steigung des Gewindes des ersten konusförmigen Abschnitts kann aus einem Bereich gewählt sein, bei dem in Abhängigkeit der vorgesehenen Werkstoffe des Gewindes und seines Gegengewindes Selbsthemmung im Gewinde eintritt. Geeignete Steigungen der metallischen Gewinde können beispielsweise aus einem Bereich von 5° bis 15°, besonders bevorzugt von 8° bis 12°, gewählt sein. Auch diese Maßnahme kann zu einem festen Sitz des jeweiligen Verschleißteils beitragen, der sich auch bei hohen und häufig auftretenden Temperaturdifferenzen nicht löst.

Auf die Eigenschaften eines erfindungsgemäßen Verschleißteils kann sich auch besonders vorteilhaft auswirken, wenn das Gewinde des gewindebehafteten ersten Abschnitts als Trapezgewinde ausgebildet ist. Der trapezförmige Querschnitt eines solchen Gewindes führt aufgrund der flächig und nicht nur linien- oder punktförmig in Kontakt stehenden Flächen des Gewindes und seines Gegengewindes, zu einer besonders wirksamen Wärme- und Stromübertragung, sofern über das Gewinde auch Strom übertragen werden soll. Hierdurch können die im jeweiligen Verschleißteil auftretenden Temperaturen und Temperaturunterschiede möglichst gering gehalten werden, was sich günstig auf das Verschleißverhalten und die erzielbaren Standzeiten auswirkt. Mit Trapezgewinden lassen sich im Zusammenhang mit der Erfindung sowohl Vorteile bezüglich des Verschleißverhaltens als auch Vorteile hinsichtlich einer sicheren Stromübertragung und Wärmeübertragung und damit der Gewährleistung einer hohen Prozeßsicherheit erzielen.

Bei einer Halterung nach gemäß der Erfindung, das ein Verschleißteil des Lichtbogen-Schweißbrenners sowie ein weiteres Bauteil des Lichtbogen-Schweißbrenners umfassen sollte, welches als Halterung zur Aufnahme und Anordnung des Verschleißteils im bzw. am Lichtbogen-Schweißbrenner vorgesehen ist, sollte gemäß dieses Aspektes der Erfindung vorgesehen sein, daß das Gewinde der Halterung mit einem Gewinde des Verschleißteils zur Erzeugung einer Schraubverbindung zwischen der Halterung und dem Verschleißteil ebenso korrespondiert, wie die konischen bzw. kegelförmigen gewindefreien Abschnitte des Verschleißteils und der Halterung, zur Erzeugung einer flächigen Anlage, miteinander korrespondieren sollten. Durch die flächige Anlage von zwei zueinander kongruenten konischen bzw. kegelförmigen gewindefreien Flächen, kann ein besonders großflächiger Kontaktbereich zwischen den Bauteilen bei gleichzeitiger Selbstzentrierung des gehaltenen Verschleißteils gegenüber der Halterung im oder am Lichtbogen-Schweißbrenner erreicht werden. Dies trägt zu einer besonders günstigen Wärmeabtragung vom Verschleißteil zur Halterung und damit zu einer Ableitung der Wärme von der Schweißprozeßstelle weg, bei. Sofern es sich beim Verschleißteil auch um ein stromführendes Bauteil des Schweißbrenners handelt, kann der großflächige Kontakt auch zu einer besonders effektiven Stromübertragung bei möglichst geringem elektrischen Widerstand beitragen. Ein möglichst geringer elektrischer Widerstand führt wiederum zu einer vorteilhaften geringeren Wärmeentwicklung aufgrund der Stromübertragung.

Zu einem besonders festen Sitz des Verschleißteils, der sich auch bei hohen und häufigen Wechseltemperaturen und Vibrationen möglichst nicht löst, kann auch beitragen, daß das bei der Montage des Verschleißteils an seiner Halterung erforderliche Anzugsmoment, zu einer hohen Flächenpressung zwischen den gewindefreien aneinander anliegenden konischen Flächen führt. Die in der Schrauben- bzw. Gewindeverbindung durch das Anzugsmoment wirkende Schraubenzugkraft führt aufgrund der konisch ausgeführten Kontaktflächen zu einer erhöhten Flächenpressung zwischen den Kontaktflächen, wodurch das jeweilige Verschleißteil und seine Halterung besonders günstig miteinander verspannt werden und ein unbeabsichtigtes Lösen der Verbindung besser als bei vorbekannten Lichtbogen-Schweißbrennern verhindert werden kann.

Ein solches Halterungssystem kann in besonders vorteilhafter Weise zwischen der Kontaktdüse, die auch als Stromdüse bezeichnet werden kann, als Verschleißteil und dem mit dem Innenrohr verbundenen Düsenstock vorgesehen sein, welcher in diesem Fall die Funktion der Halterung für die Kontaktdüse übernimmt. Die Kontaktdüse weist hierbei vorzugsweise ein auf einem Konus bzw. Kegel angeordnetes Außengewinde auf, das korrespondierend zu dem mit ihm verschraubbaren Innengewinde des Düsenstocks ausgebildet und angeordnet ist, um zwischen den beiden Gewinden eine Schraubverbindung zu erzielen. Alternativ können an den Bauteilen Innen- und Außengewinde auch vertauscht sein. Zudem ist das als Kontaktdüse ausgebildete Verschleißteil mit einem - in Längsrichtung der Kontaktdüse gesehen - vorzugsweise möglichst geringem Abstand zum Gewinde angeordneten zweiten kegelförmigen Abschnitt versehen, der gewindefrei ist und zur flächigen Anlage gegen eine bezüglich Form und Größe korrespondiere Kegelform des Düsenstocks vorgesehen ist. Vorzugsweise kann das Gewinde am kegelförmigen Abschnitt mit den geringeren Durchmessern ausgebildet sein, während die gewindefreie Kegelform am Abschnitt ausgebildet ist, welcher die im Vergleich zum gewindebehafteten Abschnitt größeren Durchmesser aufweist.

Neben der Funktion einer Halterung für die Kontaktdüse und der damit vorgesehenen beiden konisch- bzw. kegelförmigen Abschnitten, kann der Düsenstock im Bereich seines innenrohrseitigen Endes einen weiteren ersten gewindebehafteten und zweiten gewindefreien, jeweils kegelförmigen, Abschnitt, insbesondere an einer äußeren Mantel- oder Hüllfläche aufweisen. Diese beiden Abschnitte sollten mit einem kegelförmigen gewindebehafteten und einem kegelförmigen nicht gewindebehafteten Abschnitt des Endes bzw. Endstücks des Innenrohrs korrespondieren, so daß der Düsenstock mittels seines Gewindes am als Halterung dienenden Innenrohr befestigt und mittels der Kegel- bzw. Konusform selbstzentrierend positioniert werden kann. Als Gewinde der beiden aneinander lösbar angeordneten Bauteile kann wiederum vorzugsweise jeweils ein Trapezgewinde, vorzugsweise ein flaches Trapezgewinde, vorgesehen sein. Auch bei dieser Lösung können somit die Vorteile einer besonders vorteilhaften Wärme- und Stromübertragung bei gleichzeitiger Erhöhung der Standzeiten des Düsenstocks erzielt werden.

Weitere bevorzugte Ausgestaltungen der Erfindung ergeben sich aus den Ansprüchen, der Beschreibung und den Zeichnungen.

Die Erfindung wird anhand von in den Figuren rein schematisch dargestellten Ausführungsbeispielen näher erläutert, es zeigen:
- Fig. 1: eine perspektivische explosionsartige Darstellung eines erfindungsgemäßen Lichtbogen-Schweißbrenners;
- Fig. 2: einen Längsschnitt durch einen Endbereich des Lichtbogen-Schweißbrenners aus Fig. 1;
- Fig. 3: einen Längsschnitt durch eine in einem Düsenstock montierte Kontaktdüse aus Fig. 1 und 2;

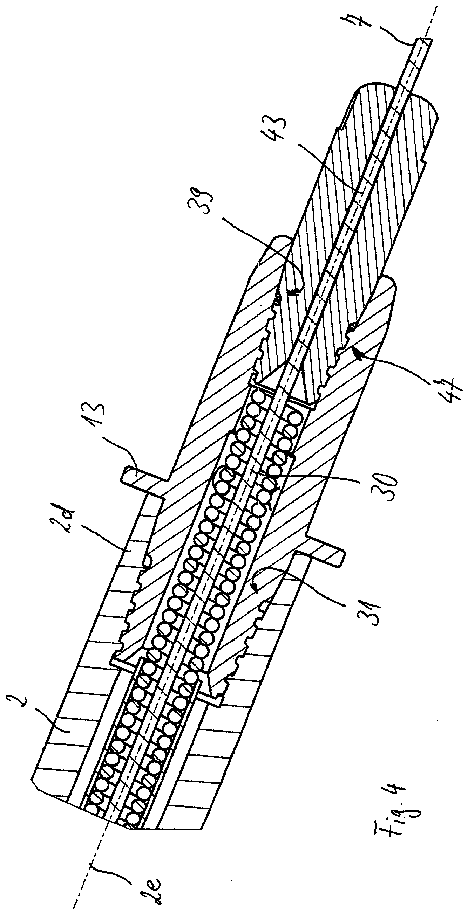

- Fig. 4: einen Längsdurchschnitt durch einen Endbereich eines Innenrohrs, in dem der Düsenstock angeordnet ist;
- Fig. 5: eine vergrößerte Darstellung des Endbereichs des Lichtbogen-Schweißbrenners aus Fig. 2;
- Fig. 6: eine Schnittdarstellung im Bereich eines Gewindes eines der Verschleißsteile und seiner Halterung im Lichtbogen-Schweißbrenner;

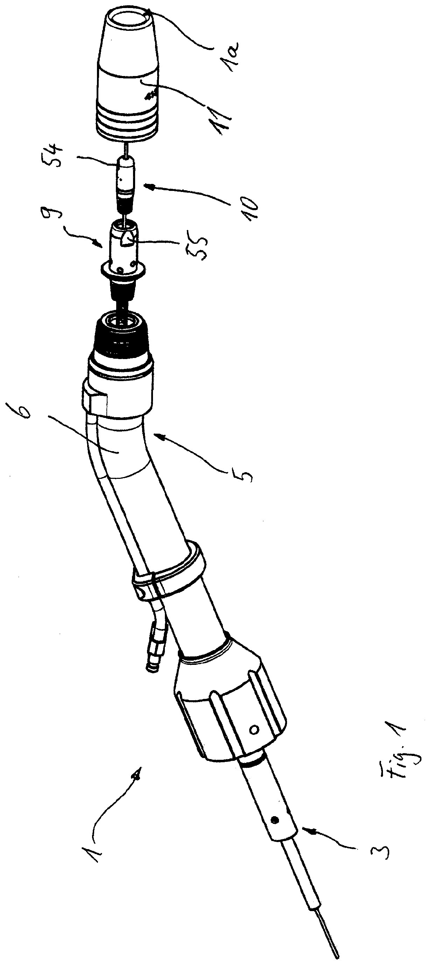

In Fig. 1 ist eine bevorzugte Ausführungsform eines erfindungsgemäßen Lichtbogen-Schweißbrenners 1 dargestellt. Der Lichtbogen-Schweißbrenner 1 ist zur Verwendung in einem Schweißautomaten, wie beispielsweise einem Schweißroboter, vorgesehen. Der Lichtbogen-Schweißbrenner 1 ist hierbei an einem nicht näher dargestellten Endmanipulator angeordnet, der in verschiedenen Raumrichtungen, vorzugsweise in sämtlichen Raumrichtungen auf beliebigen Vorschubwegen bewegbar ist. Der Endmanipulator kann hierdurch den Lichtbogen-Schweißbrenner auf seinem Vorschubweg mitführen und der Lichtbogen-Schweißbrenner an Werkstücken Schweißnähte ausführen. Der Lichtbogen-Schweißbrenner kann hierbei vorzugsweise in prinzipiell gleicher Weise ausgebildet sein, wie der in der WO 2005/049259 A1 offenbarte Lichtbogen-Schweißbrenner, wobei Unterschiede hinsichtlich des Endbereichs des Lichtbogen-Schweißbrenners aus Fig. 1 vorhanden sind, auf die nachfolgend eingegangen wird. Durch die nicht zwingend notwendige, jedoch besonders bevorzugte Ausführungsform des Lichtbogen-Schweißbrenners, wonach dieser einen außenliegenden Statorteil und einen innenliegenden Rotorteil aufweist und eine Zuführung und Versorgung der Schweißstelle mit Schweißmedien zumindest im wesentlichen entlang einer und koaxial zu einer Rotationslängsächse des Schweißbrenners und des Endmanipulators erfolgt, kann eine Endlosrotationsmöglichkeit des Schweißbrenners erreicht und eine Verdrillung eines Schweißkabels bei Rotationsbewegungen vermieden werden.

Beim dargestellten Lichtbogen-Schweißbrenner 1 handelt es sich um einen nach dem Metall-Schutzgas Schweißverfahren arbeiteten Schweißbrenner 1. Bei diesem wird ein beim Schweißprozeß abschmelzender Schweißdraht 7 der vorgesehenen Schweißstelle zu- und aufgrund des Verbrauchs des Schweißdrahts 7 während eines Schweißprozesses kontinuierlich nachgeführt. Der Schweißdraht 7 wird hierbei in der Regel zusammen mit seiner Seele 8a und einer Isolierung 8b durch das Innere des Schweißbrenners 1, meistens durch ein Innenrohr 2, zugeführt. Zusätzlich wird ein Schutzgas der Schweißstelle zugeführt, in der Regel ebenfalls durch das Innenrohr 2. Im Ausführungsbeispiel ist das Schutzgas ein Inertgas, in anderen erfindungsgemäßen Ausführungsbeispielen kann als Schutzgas auch ein Aktivgas - oder eine Mischform von beiden - zugeführt werden. Im Ausführungsbeispiel wird zudem zur Schweiß- bzw. Prozeßstelle am freien Ende 1a des Lichtbogen-Schweißbrenners Strom geleitet, der dazu genutzt wird, an der Schweißstelle einen Lichtbogen zu zünden und für den Schweißvorgang aufrecht zu erhalten. Der Lichtbogen-Schweißbrenner 1 ist deshalb in seinem Einsatz mit einer nicht dargestellten Schweißstromquelle und einem nicht dargestellten Drahtvorschub verbunden. In bevorzugten Ausführungsbeispielen können sowohl der Schweißdraht, als auch das Schutzgas und der Strom über ein an sich bekanntes Schweißkabel, insbesondere ein Koaxialschweißkabel, dem Lichtbogen-Schweißbrenner 1 an seiner Stromanschlußstelle 3 zugeführt werden. An der Anschlußstelle 3 des Lichtbogen-Schweißbrenners 1 wird dann das Schutzgas in eine Durchleitung des Schweißbrenners 1 in dessen Inneres zur Durchführung des Schutzgases von der Anschlußstelle 3 zum freien Ende 1a an die Schweißstelle, eingeleitet. Der Strom wird ebenso vom Schweißkabel durch den Schweißbrenner 1 zur Schweiß- bzw. Prozeßstelle geleitet. Auch der Strom wird im Inneren des Schweißbrenners zur Prozeßstelle geleitet, so daß eine Außenseite des Lichtbogen-Schweißbrenners 1 stromfrei ist.

Der Lichtbogen-Schweißbrenner 1 weist somit einen Brennerhals 5 auf, der mit einem Außenrohr 6 sowie mit dem im Außenrohr 6 und mit Abstand zu diesem koaxial angeordneten Innenrohr 2 versehen ist. Das Außenrohr 6 ist gegenüber dem Innenrohr 2 elektrisch isoliert, so dass zwischen dem Außenrohr 6 und dem Innenrohr 2 keine elektrisch leitende Verbindung besteht. Das Außenrohr 6 und das Innenrohr 2 verlaufen vom einen Ende des Lichtbogen-Schweißbrenners bis in etwa zu dessen anderen Ende 1a. Im Bereich des Endes 1a sind mehrere austauschbare Verschleißteile angeordnet, auf die nachfolgend näher eingegangen wird.

In den Darstellungen von Fig. 1, 2 und 5 ist der Bereich des freien Endes 1a des Lichtbogen-Schweißbrenners in einer Explosions- und in Schnittdarstellungen gezeigt. Diesen Darstellungen ist zu entnehmen, daß - vor allem aufgrund der hohen Prozeßtemperaturen - der Bereich des freien Endes 1a des Schweißbrenners 1 mit austauschbaren Bauteilen versehen ist, die mit dem Außenrohr 6 oder dem Innenrohr 2 direkt oder indirekt verbunden sind. Diese schweißbrennerendseitigen Bauteile unterliegen einem hohen Verschleiß und müssen deshalb regelmässig ausgetauscht werden, wozu zwischen den Bauteilen lösbare Verbindungen vorgesehen sind. Es handelt sich hierbei insbesondere um einen sogenannten Düsenstock 9, um eine Kontaktdüse 10 sowie um eine Gasdüse 11, die alle als Verschleißteile bezeichnet werden können. Der Düsenstock 9 ist hierbei mit einem seiner Enden 9a im Bereich des Endes 2a des Innenrohrs 2 befestigt. In einer Endlage des Düsenstocks 9 am Innenrohr 2 ist die Stirnseite des Endes 9a des Düsenstocks 9 mit Abstand zu einer innenliegenden stirnseitigen Begrenzungswand des Endstücks 2d des Innenrohrs 2 angeordnet. Hierdurch ist gewährleistet, daß der gewindefreie und der gewindebehaftete Abschnitt mit seiner jeweiligen Gegenfläche stets in Anlage bringbar ist. Mit seinem anderen Ende 9b ist der Düsenstock 9 mit einem der Enden 10a, 10b der Kontaktdüse 10 lösbar verbunden, wobei das andere Ende 10a, 10b der Kontaktdüse ein innenseitiges Ende des Schweißbrenners 1 bzw. des Brennerhalses 5 darstellt. Die hohlzylindrische Gasdüse 11 ist koaxial zur Kontakdüse 10 und zum Düsenstock 9 und mit radialem Abstand zu diesen angeordnet, so daß sich zwischen einer Innenseite 11c der Gasdüse 11 und der Außenfläche 9d des Düsenstocks 9 und der Kontaktdüse 10 ein im Querschnitt ringförmiger Gasauslaß 12 ergibt, der aus dem Brennerhals 5 mündet. Innerhalb des Brennerhalses 5 ist der Gasauslass 12 durch einen Flansch 13 des Düsenstocks 9 begrenzt.

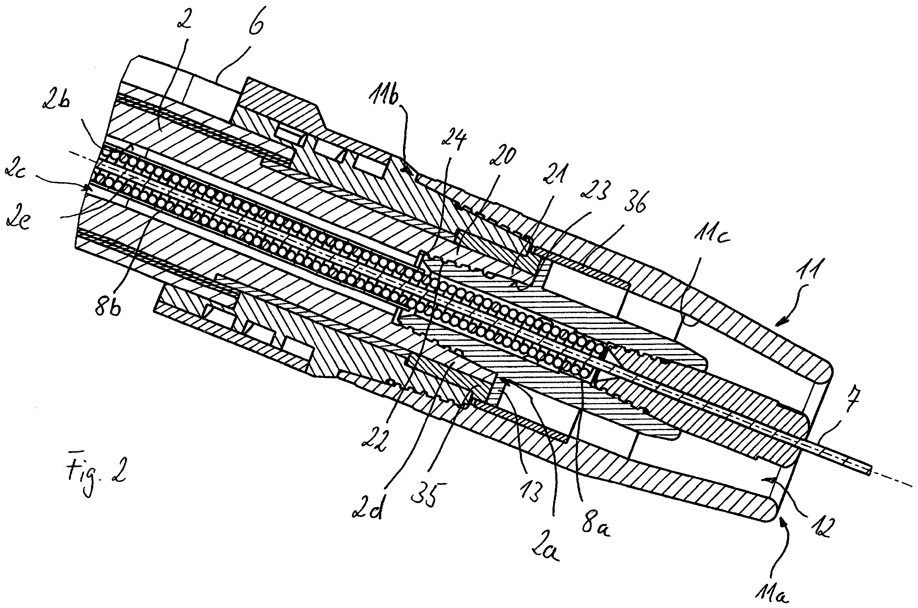

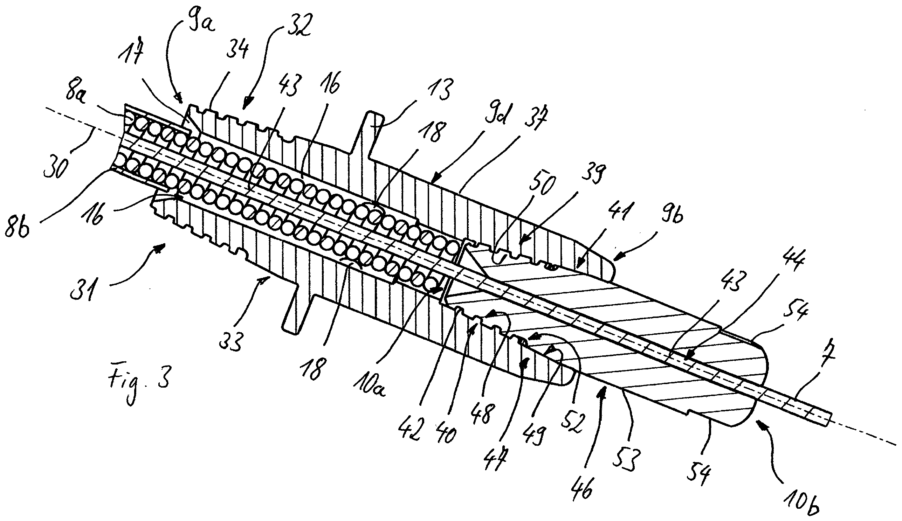

Wie unter anderem Fig. 2 und 3 zu entnehmen ist, ist der Düsenstock 9 mit einer Durchgangsausnehmung 16 versehen, die sich von seinem innenrohrseitigen Ende 9a bis zum seinem kontaktdüsenseitigen Ende 9b erstreckt. Im Bereich des innenrohrseitigen Endes 9a ist ein Einlaß 17 der Durchgangsausnehmung 16 trichterförmig ausgebildet, die sich dann mit einer zylindrischen Form mit konstantem Durchmesser fortsetzt. Zwischen dem innenrohrseitigen Ende 9a und dem kontaktdüsenseitigen Ende 9b ist eine Wand des Düsenstock 9 mit mehreren radial am Umfang der Wand verteilten und radial von der Durchgangsausnehmung 16 durch die Wand verlaufende Auslassausnehmungen 18 versehen, die dazu vorgesehen sind, durch das Innenrohr 2 strömendes Schutzgas in den ringförmigen Gasauslaß 12 und von dort aus dem Ende 1a des Brennerhalses 5 zuzuführen.

Zur Befestigung des Düsenstocks 9 am Innenrohr 2 weist Letzteres ein Endstück 2d der Innenwand 2b seiner zentrischen Durchgangsausnehmung 2c auf, das sich konisch bzw. kegelförmig erweitert. Die Durchgangsausnehmung 2c ist zur Aufnahme des Schweißdrahts innerhalb einer Seele und zur Schutzgaszuführung vorgesehen. Dieses konische Endstück 2d der Innenwand 2b ist wiederum mit zwei Abschnitten 20, 21 versehen, wobei ein erster konischer bzw. kegelförmiger Abschnitt 20 mit einem Innengewinde 22 versehen ist. Ein sich in Richtung des stirnseitigen Endes des Innenrohrs anschließender zweiter konischer Abschnitt 21 ist im Gegensatz zu seinem ersten konischen Abschnitt 20 gewindefrei und mit einer im wesentlichen glatten Oberfläche 23 versehen. Im hier dargestellten Ausführungsbeispiel weisen beide Abschnitte 20, 21 den gleichen Konus- bzw. Kegelwinkel auf, wobei der gewindebehaftete Abschnitt 20 mit den kleineren und der gewindefreie Abschnitt 21 im Vergleich dazu mit den größeren Durchmessern versehen ist.

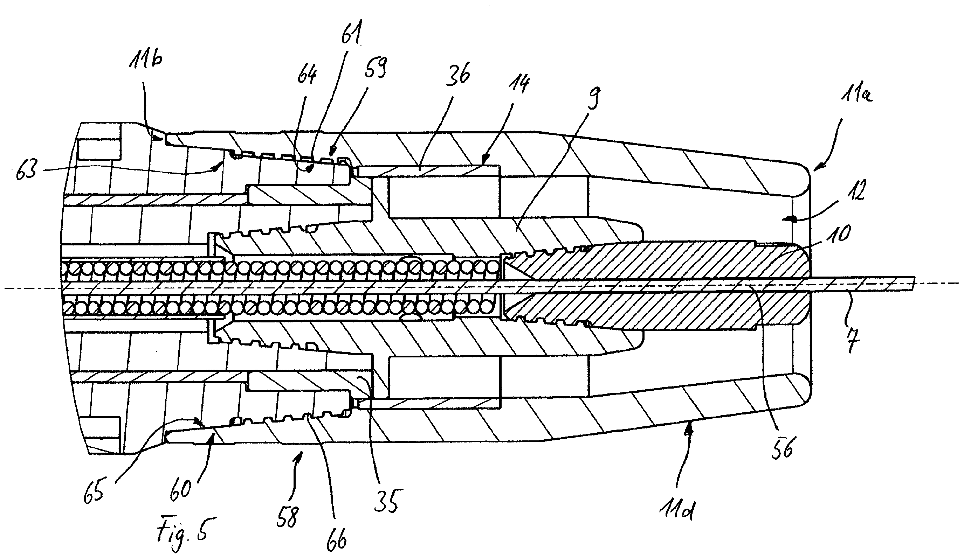

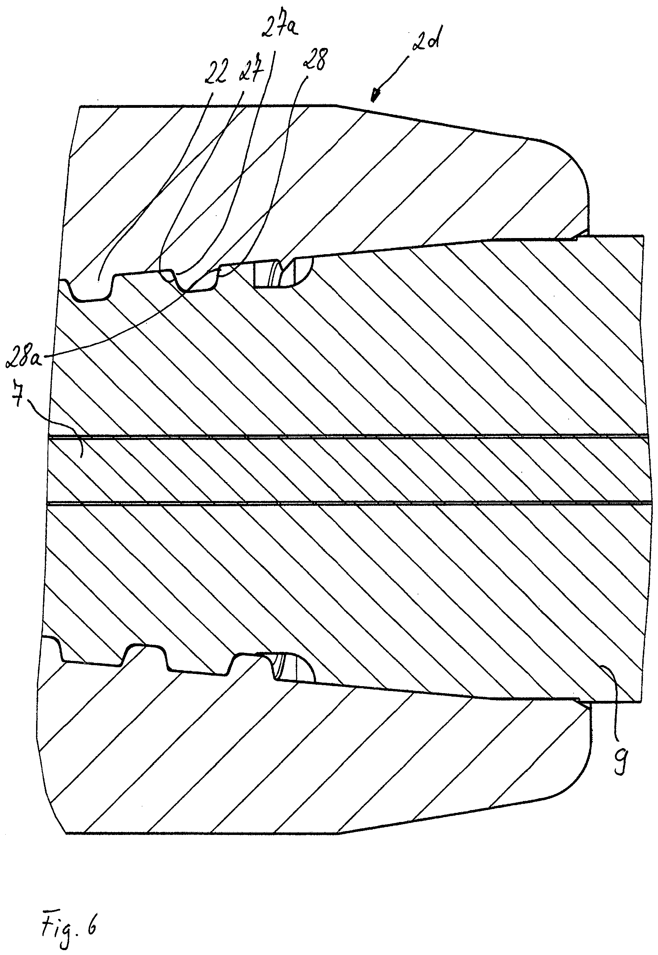

Als Gewindetyp für das Innengewinde 22 des Innenrohrs 2 kann vorzugsweise ein Trapezgewinde vorgesehen sein, wie es beispielsweise in Fig. 6 gezeigt ist. Wie insbesondere in Fig. 5 zu erkennen ist, geht die zylindrische Durchgangsausnehmung 2c des Innenrohrs 2 mit einem Absatz 24 in das Innengewinde 22 über. Hierdurch ist bereits beim ersten Gewindegang der Gewindegrund des Innengewindes 22 mit einem größeren Durchmesser versehen, als der Durchmesser der zylindrischen Durchgangsausnehmung 2c. Aufgrund der auf die zylindrische Form der Durchgangsausnehmung folgende konische bzw. kegelstumpfförmige Form des ersten Abschnitts 20, nehmen die Durchmesser des Gewindegrunds, in axialer Richtung, hin zum zweiten konischen Abschnitt 21 gesehen, zu.

Das bezüglich seines Querschnitts symmetrische trapezförmige Innengewinde 22, weist geradlinige Flankenflächen 27, 28. Vorzugsweise ist für das Innengewinde 22 ein flaches Trapezgewinde vorgesehen. Die Flankenflächen 27, 28 liegen idealerweise flächig gegen die jeweils mit dem gleichen Flankenwinkel versehenen Flankenflächen 27a, 28a des Außengewindes des Düsenstocks 9 an. Außerdem kann vorzugsweise eine Steigung des Außen- und des Innengewindes 22 vorgesehen sein, deren Größe derart bestimmt ist, daß sich mit dem Werkstoff des als Gewindepartner zum Innengewinde vorgesehen Außengewinde Selbsthemmung ergibt. Dies kann insbesondere dadurch erreicht werden, daß der Steigungswinkel der Gewindeflanke kleiner ist als der Arcustangens der Gleitreibzahl der Werkstoffpaarung des Außen- und des Innengewindes. Vorzugsweise kann vorgesehen sein, daß sowohl aufgrund des Konus- bzw. Kegelwinkels im Bereich des ersten Abschnitts 20 als auch aufgrund der Steigung des Trapezgewindes 22 Selbsthemmung eintritt, jeweils unter Berücksichtigung der eingesetzten Werkstoffpaarungen. Die nachfolgend erörterten weiteren Gewinde können vorzugsweise in prinzipiell gleicher Weise ausgebildet sein, gegebenenfalls können auch Außen- und Innengewinde vertauscht sein.

Der am Innenrohr 2 lösbar befestigte Düsenstock 9 weist eine entlang seiner Längsachse 30 verlaufende Längserstreckung auf. Im am Innenrohr 2 angeordneten Zustand fluchtet die Längsachse 30 des Düsenstocks 9 mit der Längsachse 2e des Innenrohrs 2 und dessen Durchgangsausnehmung 2c. Auch der Düsenstock 9 weist eine Durchgangsausnehmung 16 auf, für welche die Längsachse des Düsenstocks 9 eine Symmetrieachse darstellt. Im Bereich des innenrohrseitigen Endes 9a des Düsenstocks 9 und dessen Stirnseite ist die Durchgangsausnehmung 16 trichterförmig gestaltet, wobei ein Durchmesser von deren Öffnung zunächst den gleichen oder einen größeren Durchmesser als die Durchgangsausnehmung 2c des Innenrohrs 2 aufweist und sich dann zu einem kleineren Durchmesser verjüngt.

In Bezug auf die Längsachse 30 etwa in der Mitte des Düsenstocks 9 sind die mehreren am Umfang des Düsenstocks 9 verteilten und radial von der Durchgangsausnehmung 16 nach außen durch die Wand des Düsenstocks 9 verlaufenden Auslaßausnehmungen 18 angeordnet. Im weiteren axialen Verlauf der Durchgangsausnehmung 16 des Düsenstocks 9 verjüngt sich die Durchgangsausnehmung 16 und weist dann zunächst wieder einen Abschnitt mit konstantem Durchmesser auf. An diesen schließt sich ein sich konisch erweiterndes Endstück an, das sich nahezu bis zum kontaktdüsenseitigen Auslaß bzw. Ende 9b der Durchgangsausnehmung 16 erstreckt. Durch die konische Form und den kreisförmigen Querschnitt ergibt sich eine Grundform dieses Endstücks, die auch als kegelförmig bezeichnet werden kann. Details zur Ausgestaltung der die Durchgangsausnehmung 16 im Bereich des Endes 9b begrenzende Innenfläche werden nachfolgend noch erörtert.

Hinsichtlich der äußeren Mantel- oder Hüllfläche des Düsenstocks 9 ist im bevorzugten Ausführungsbeispiel ein erster Abschnitt 32 - und zwar jener, mit einem Bereich kleinerer Durchmesser - mit einem Außengewinde 34 versehen. Dieses Außengewinde 34 ist als Gewindepartner für das Innengewinde 22 des Innenrohrs 2 vorgesehen. Das Außengewinde 34 weist daher die gleiche Querschnittsform und die gleiche Steigung wie das Innengewinde 22 des Innenrohrs 2 auf. Im Ausführungsbeispiel ist somit auch für das Außengewinde 34 ein Trapezgewinde mit einer Steigung vorgesehen, die der Steigung des Innengewindes 22 entspricht und derart gewählt ist, daß sich aufgrund der Werkstoffpaarung und der Steigung Selbsthemmung einstellt. Ebenso ist der bezüglich seines Querschnitts kreisrunde Konus bzw. Kegel des ersten Abschnitts 32 mit dem gleichen Konus- bzw. Kegelwinkel wie der erste Abschnitt 20 des Endstücks der konisch ausgeführten Bohrungswand des Innenrohrs 2 versehen. Gleiches gilt auch für den gewindefreien zweiten Abschnitt 33 der Mantel- oder Hüllfläche des Düsenstocks 9 und des zweiten konischen und gewindefreien Abschnitts 21 der Innenfläche des Innenrohrs 2. Auch diese beiden gewindefreien Flächenabschnitte sind bezüglich der vorgesehenen Werkstoffpaarung und dem Konus- bzw Kegelwinkel derart ausgelegt, daß die übereinstimmenden Konuswinkel kleiner sind als der Reibwinkel und somit Selbsthemmung gegeben ist.

An der äußeren Mantel- oder Hüllfläche des Düsenstocks 9 schließt sich an den gewindefreien konischen zweiten Abschnitt 33 ein zylindrischer Abschnitt und an diesen der flanschartige Ring 13 an, der einstückig mit dem Düsenstock 9 verbunden ist und zur Anlage gegen die Stirnseite des Innenrohrs 2 sowie zur Anlage gegen ein hülsenförmiges Isolierelement 35 vorgesehen ist. Das hülsenförmige Isolierelement 35 ist auf das Innenrohr 2 aufgeschoben. Mit der Umfangsfläche des Flansches 13 liegt diese einem zweiten hülsenförmigen Isolierelement 36 gegenüber, das wiederum in eine Hinterschneidung der Innenfläche 11c der Gasdüse 11 eingesetzt ist. Mit einer seiner Stirnseiten liegt das zweite hülsenförmige Isolierelement 36 gegen eine Stirnseite des Außenrohrs 6 an. Der Flansch 13 verschließt somit den ringförmigen Gasauslaß 12 rückseitig, wodurch ein Gasrückfluß entgegen der vorgesehen Strömungsrichtung des Schutzgases vermieden werden kann. Im Ausführungsbeispiel wird somit der Gasauslaß durch den Düsenstock 9 und seinen Flansch 13, die Kontaktdüse 10, das zweite hülsenförmige Isolierelement 36 sowie die Gasdüse 11 gebildet. An den Flansch 13 wiederum schließt sich beispielsweise ein zylindrischer Abschnitt 37 der Mantel- oder Hüllfläche des Düsenstocks 9 an, der dann in einen sich konisch bzw. kegelförmig verjüngenden Endbereich der Mantel- oder Hüllfläche übergeht.

Das sich konisch bzw. kegelförmig erweiternde schweißbrennnerendseitige Endstück 39 der Bohrungswand des Düsenstocks 9 weist wiederum zumindest zwei Abschnitte 40, 41 auf und ist prinzipiell gleich aufgebaut, wie das düsenstockseitige Endstück der Durchgangsausnehmung 2c des Innenrohrs 2. Ein erster Abschnitt des Endstücks 39 ist wiederum mit einem Innengewinde 42 versehen. Im Ausführungsbeispiel ist dieses Innengewinde 42 als eingängiges Trapezgewinde ausgebildet, dessen Steigung und Querschnittsform mit einem Trapezaußengewinde der Kontaktdüse 10 als Gewindepartner korrespondiert. Das Trapezinnengewinde weist vorzugsweise eine Steigung auf, die unter Berücksichtigung der Werkstoffe der beiden Gewindepartner eine Selbsthemmung des Gewindes bewirken. Im Ausführungsbeispiel weist der Werkstoff des Trapezinnengewindes Kupfer, eine Kupferlegierung oder eine elektrisch leitende Beschichtung auf und die Steigung des Trapezinnengewindes ist kleiner als der Reibwinkel.

Auf den gewindebehafteten konusförmigen ersten Abschnitt 40 folgt in Richtung zum kontaktdüsenseitigen Ende des Düsenstocks 9 ein weiterer konus- oder kegelförmiger Abschnitt 41 der Innenfläche, der jedoch gewindefrei ist und im Wesentlichen eine glatte Oberfläche hat. Im Ausführungsbeispiel entspricht der Konuswinkel des gewindebehafteten ersten Abschnitts 40 dem Konuswinkel des gewindefreien zweiten konusförmigen Abschnitts 41 des Endstücks 39. In anderen Ausführungsbeispielen könnten für die Koni bzw. Kegelformen der beiden Abschnitte 40, 41 auch unterschiedliche Winkel vorgesehen sein.

Im insgesamt kegelförmigen Endstück 39 der Innenfläche des Düsenstocks 9 ist ein Bereich eines stirnseitigen Endes der Kontaktdüse 10 angeordnet. Ebenso wie der Düsenstock 9 ist auch die Kontaktdüse 10 als längserstrecktes Bauteil gestaltet, das - bis auf bestimmte Details an der Kontaktdüse 10 - rotationssymmetrisch bezüglich einer Längsachse 43 ausgebildet ist, wobei diese Symmetrieachse gleichzeitig Längs- und Symmetrieachse einer Durchgangsbohrung 44 an beiden Stirnseiten der Kontaktdüse 10 ist. An der düsenstockseitigen Stirnseite der Durchgangsbohrung 44 bzw. -ausnehmung ist diese trichterförmig mit sich stetig verkleinertem Durchmesser ausgestaltet. Dieser Trichter dient als Einführhilfe des Schweißdrahts - und gegebenenfalls als Zentrierhilfe für eine Seele - bei einer in den Schweißbrenner neu eingesetzten Kontaktdüse 10 oder eines neu in den Schweißbrenner eingeführten Schweißdrahts. Hinter dem Trichter weist die Durchgangsbohrung 44 dann einen konstanten Durchmesser auf, der auf die Größe der zur Benutzung vorgesehenen Schweißdrähte abgestimmt ist. Innenrohr 2, Düsenstock 9 und Kontaktdüse 10 bilden somit zusammen eine zentrisch im Schweißbrenner 1 vorhandene Durchführung für den Schweißdraht, wobei sich vom Innenrohr 2 zum Düsenstock 9 und dann zur Kontaktdüse 10 der Durchmesser dieser Durchführung jeweils verkleinert.

Eine Mantel- oder Hüllfläche 46 der Kontaktdüse 10 weist im Bereich ihres düsenstockseitigen Endes ein Endstück 47 dieser Fläche auf, das in zwei Abschnitte 48, 49 unterteilbar ist. Ein endseitiger erster konus- oder kegelstumpfförmiger Abschnitt 48, mit kleineren Durchmessern, erstreckt sich vom düsenstockseitigen Ende der Kontaktdüse 10 in Richtung auf das andere Ende der Kontaktdüse 10, wobei die Größe der Durchmesser des ersten Abschnitts in dieser Richtung gesehen, ansteigen. Der erste Abschnitt 48 ist über seine gesamte Länge mit einem Außengewinde 50 versehen, im bevorzugten Ausführungsbeispiel ein Trapezaußengewinde, das bezüglich seiner Geometrie, insbesondere seiner Querschnittsform und Steigung, mit dem kontaktdüsenseitigen Innengewinde 42 des Düsenstocks 9 korrespondiert. Ebenso entspricht der Konus- bzw. Kegelwinkel des ersten Abschnitts 48 dem Konus- bzw. Kegelwinkel des ersten Abschnitts 40 des Endstücks des Düsenstocks 9. Dem ersten konischen Abschnitt 48 der Kontaktdüse 10 folgt in Richtung auf das freie Ende des Brennerhalses 5 ein zweiter konusförmiger Abschnitt 49 des Endstücks 47 nach. Dieser zweite konus- bzw. kegelstumpfförmige Abschnitt 49 ist gewindefrei und mit einer zumindest im wesentlichen glatten Oberfläche versehen. Die Konus- bzw. Kegelwinkel der beiden Abschnitte 48, 49 der Kontaktdüse 10 sind vorzugsweise identisch. Sie entsprechen zudem den Konus- bzw. Kegelwinkeln der beiden Abschnitte 40, 41 der Innenfläche des Düsenstocks 9.

Zwischen dem ersten und dem zweiten konus- bzw. kegelförmigen Abschnitt 48, 49 der äußeren Mantelfläche 46 der Kontaktdüse 10 ist im dargestellten bevorzugten Ausführungsbeispiel ein - in Richtung der Längsachse 43 gesehen - kurzer Freistich 52. Dieser Freistich 52 weist einen kleineren Durchmesser auf, als der angrenzende Beginn des zweiten Abschnitts 49. Vorzugsweise ist der Durchmesser des Freistichs 52 kleiner als der größte Durchmesser des ersten und des kleinsten Durchmessers des zweiten Abschnitts 48, 49.

Am Ende des zweiten Abschnitts 49, an dem dieser seinen größten Durchmesser hat, geht die Mantel- bzw. Hüllfläche 46 in einen zylindrischen Abschnitt 53 der Mantelfläche 46 über. Im Bereich des freien Endes 10b der Kontaktdüse 10 ist der zylindrische Abschnitt 53 der Mantelfläche 46 mit Schlüsselflächen 54 versehen, also Flächen, die einen formschlüssigen Angriff und ein Erfassen der Kontaktdüse 10 mittels eines geeigneten Werkzeugs erlauben. Im Ausführungsbeispiel sind die Schlüsselfächen 54 zwei Abflachungen der zylindrischen Mantelfläche 46, die sich - in Längsrichtung gesehen - über einen Teil des zylindrischen Abschnitts 53 erstrecken. Die beiden Abflachungen bzw. Schlüsselflächen 54 sind somit im bevorzugten Ausführungsbeispiel zwei zumindest im wesentlichen sich gegenüberliegende, d.h. am Umfang um 180° versetzte, parallel zueinander ausgerichtete ebene rechteckförmige Flächen. In anderen Ausführungsbeispielen der Erfindung können solche Schlüsselflächen auch jede andere Anzahl und Form aufweisen, die einen formschlüssgen Kontakt mit einem Werkzeug und eine Übertragung eines Drehmoments auf die Kontaktdüse 10 erlauben. Wie in Fig. 1 zu erkennen ist, weist auch der Düsenstock 9 derartige Schlüsselflächen 55 zum Eingriff eines geeigneten Werkzeugs auf.

Ein Endabschnitt des Innenrohrs 2, die Kontaktdüse 10 und der Düsenstück 9 sind von der Gasdüse 11 umgeben. Die Gasdüse 11 besitzt, wie in Fig. 2 gezeigt ist, ebenfalls eine längliche Form und hat ein erstes stirnseitiges Ende 11a und ein gegenüberliegendes angeordnetes zweites stirnseitiges Ende 11b. Eine Gasdüsenlängsachse 56 verläuft durch das erste und das zweite Ende 11a, 11b und fluchtet mit der Längsachse des Schweißbrenners 1 bzw. Brennerhalses 5 und damit mit den Längsachsen 43 der Kontaktdüse 10 und des Düsenstocks 9. Am ersten Ende 11a besitzt die Gasdüse eine konische Form und wird zylindrisch in Richtung zum zweiten, dem außenrohrseitigen, Ende 11b. Eine äußere Mantelfläche 11d sowie eine innere Begrenzungswand 11c der Gasdüse 11 verlaufen hierbei im zumindest wesentlichen parallel zueinander.

Im Bereich des ersten, des freien, Endes 11a, weist die Gasdüse 11 eine innere Ausdrehung auf, durch die sich eine konische Form ergibt. Anschließend wird in Richtung auf das zweite, das außenrohrseitige Ende 11b, aus der konischen Ausdrehung eine zylindrische Form bzw. Bohrung, die mit einer Hinterschneidung 14 versehen ist, bevor ein konisches Endstück 58 folgt, das zwei Abschnitte 59, 60 aufweist. Diese geometrische Ausbildung ist nur beispielhaft. Es sind auch andere Formenfolgen denkbar. Der zylindrischen Bohrung folgt als erster Abschnitt 59 ein mit einem Innengewinde 61 versehener kegeliger bzw. konischer Abschnitt 59, wobei das hier vorgesehene Innengewinde 61 als Trapezgewinde ausgebildet ist. Sowohl die Steigung des Gewindes 61 als auch der Konus- bzw. Kegelwinkel sind vorzugsweise derart gewählt, daß sie jeweils kleiner als der Reibwinkel bzw. kleiner als der Arcustangens des Reibbeiwerts der beteiligten Werkstoffe sind. Angrenzend daran folgt als zweiter Abschnitt 60 ein gewindefreier Kegelabschnitt. Der Kegelwinkel des zweiten Abschnitts entspricht vorzugsweise dem Kegelwinkel des ersten Abschnitts 59 und liegt damit ebenfalls unterhalb des Reibwinkels zwischen den mit in Kontakt stehenden Werkstoffen. Das zweite Ende der Gasdüse 11b endet mit einem kurzen Zylinderabschnitt, in welchen der zweite Abschnitt 60 übergeht.

Das Ende des Außenrohrs 6 ist mit einem zum Endstück 58 der Innenfläche der Gasdüse 11 korresponierenden Endstück 63 seiner Außen- oder Mantelfläche versehen. Vom freien Ende des Außenrohrs 6 ausgehend, weist das Endstück 63 der Außenfläche einen gewindebehafteten ersten Abschnitt 64 auf. Das Außengewinde 66 ist ein Trapezgewinde, das bezüglich seiner Geometrie mit dem Trapezinnengewinde 61 korrespondiert. Gleiches gilt für den Kegel- bzw. Konuswinkel des ersten Abschnitts 64 des Außenrohrs 6, auch dieser entspricht dem Konus- bzw. Kegelwinkel des gewindebehafteten ersten Abschnitts 59 des Endstücks der Innenfläche der Gasdüse 11. Der zweite Abschnitt 65 des Endstücks des Außenrohrs 6 ist wiederum gewindefrei und als zumindest glatte Fläche ausgebildet. Auch deren Kegel- bzw. Konuswinkel entspricht dem Kegel- bzw. Konuswinkel des zweiten Abschnitts 60 des Endstücks der Gasdüse 11. An den gewindefreien kegelförmigen Abschnitt 65 schließt sich der kurze stirnendseitige zylindrische Abschnitt an, dessen Innenwand den gleichen Radius aufweist, wie das an ihn angrenzende Ende des gewindefreien kegelförmigen Abschnitts.

Der Endabschnitt des Brennersystems, welcher an dem luft- bzw. wassergekühlten Brennerhals 5 lösbar montiert ist, besteht somit hauptsächlich aus den Verschleißteilen Düsenstock 9, Kontaktdüse 10, sowie der Gasdüse 11. Wie vorstehend erläutert ist, sind im bevorzugten Ausführungsbeispiel der Erfindung sämtliche Verschleißteile, also zumindest der Düsenstock 9, die Kontaktdüse 10 sowie die Gasdüse 11, über Kontaktflächen miteinander verbunden, welche bezüglich ihres prinzipiellen Aufbaus gleich gestaltet sind. Diese Kontaktflächen befinden sich jeweils an einem Endstück 31, 39, 63, von einer der äußeren Mantelflächen oder einer eine Ausnehmung begrenzenden Innenwand des jeweiligen Verschleißteils. Für eine Verbindung mit einem anderen Verschleißteil oder einem fest installierten Bauteil des Lichtbogenschweißbrenners, weist das jeweilige Verschleißteil zumindest einen ersten kegelförmigen Abschnitt und einen zweiten kegelförmigen Abschnitt auf, die vorzugsweise möglichst nahe zueinander angeordnet sind. In jedem der Fälle ist eine der beiden Abschnitte mit einem Gewinde versehen, das zusammen mit einem Gewindepartner eines anderen Bauteils eine Gewindeverbindung für das jeweilige Verschleißteil ergeben. Sämtliche Gewinde sind vorzugsweise als Trapezgewinde, besonders bevorzugt als flache Trapezgewinde ausgebildet, deren Steigungen vorzugsweise im Selbsthemmungsbereich liegen.

Das jeweilige kegelförmige Endstück geht vorzugsweise in einen zylindrischen gewindefreien Abschnitt des jeweiligen Verschleißteils über. Der dem jeweiligen Endstück nachfolgende und mit ihm einstückig verbundene zylindrische Abschnitt kann vorzugsweise wie ein Ringanker wirken und somit dem jeweiligen Bauteil trotz hoher Andruckkräfte gegen seinen Kontaktpartner und hoher Anzugsmomente in der Gewindeverbindung, Formstabilität verleihen. Vorzugsweise weist hierbei der nachfolgende zylindrische Abschnitt mit konstantem Durchmesser einen größeren Durchmesser auf, als zumindest einer der beiden Abschnitte des jeweiligen Endstücks. Der ähnlich einem Ringanker wirkende zylindrische Abschnitt weist vorzugsweise zumindest den gleichen oder einen größeren Durchmesser als der größte Durchmesser der jeweiligen beiden Abschnitte auf, denen der zylindrische Abschnitt möglichst unmittelbar nachfolgt. Besonders günstige Ergebnisse können erzielt werden, wenn der erste Abschnitt eines Endstücks mit den kleinsten Durchmessern versehen ist und das Gewinde des jeweiligen Endstücks trägt. Der zweite Abschnitt kann dann im Vergleich zum ersten Abschnitt größere Durchmesser aufweisen und sollte gewindefrei sein. Der sich vorzugsweise unmittelbar an den zweiten Abschnitt anschließende zylindrische Abschnitt kann wiederum einen Durchmesser aufweisen, der zumindest gleich oder größer ist, als der größte Durchmesser des zweiten Abschnitts. Dieser größte Durchmesser des zweiten Abschnitts grenzt vorzugsweise direkt an den zylindrischen Abschnitt an. Dieser Aufbau kann sowohl bei äußeren Mantelflächen als auch bei Begrenzungswänden von Ausnehmungen von Verschleißteilen oder Halterungen des Lichtbogen-Schweißbrenners vorgesehen sein, die am Lichtbogen-Schweißnbrenner zur austauschbaren Aufnahme eines anderen Bauteils vorgesehen sind.

Jedes der Verschleißteile kann für die Bereitstellung einer Verbindung, außer dem gewindebehafteten ersten Abschnitt eine gewindefreie Kegel- oder Konusfläche als zweiten Abschnitt aufweisen, der für eine flächige Anlage gegen eine zu ihr korrespondierende Kegel- oder Konusfläche eines Kontaktpartners vorgesehen ist. Gewinde- und gewindefreier Abschnitt eines der Verschleißteile sind somit vorzugsweise einstückig im gleichen Bauteil realisiert.-Aufgrund der Konusform der Übertragungsflächen wird die jeweilige Fläche gegenüber der zylindrischen Form, bei gleichbleibender Axiallänge vergrößert. Wegen der Keilwirkung der Konen wird die Flächenpressung stark erhöht, dadurch wird sowohl die Wärmeübertragung als auch die Stromübertragung verbessert. Durch das konische Trapezgewinde und bei Einhaltung einer Steigung, die im Selbsthemmungsbereich liegt, wird die Gefahr eines aufgrund von Prozeßumständen erfolgenden selbsttätigen Lösens der Gewindeverbindung stark reduziert. Dies wirkt sich positiv auf den Festsitz der Verbindung aus. Die Klemmung im Konus wird dadurch noch verstärkt. Außerdem trägt auch ein geeigneter Konuswinkel, jeweils für den gewindebehafteten ersten Abschnitt und/oder auch für den gewindefreien zweiten Abschnitt, der jeweils kleiner als der Reibwinkel der Werkstoffpaarungen ist, zu einer Selbsthemmung und damit zu einem Festsitz des jeweiligen Verschleißteils bei.

Ein weiterer Vorteil der erfindungsgemäßen Lösung besteht darin, daß die gegeneinander anliegenden gewindefreien Konusflächen eine bezüglich der Längsachse des Innenrohrs 2 zentrische Ausrichtung der Bauteile des Endabschnittes des Brennerhalses bewirken. Aufgrund des jeweiligen zylindrischen Abschnittes, welcher an allen innenliegenden Kegelabschnitte, vorzugsweise den gewindefreien Abschnitten, angrenzt, wird die Belastung der Bauteile mit Innengewinde beim Einschrauben des Gegenstückes minimiert. Die Zentrierung der Bauteile trägt zudem in besonders vorteilhafter Weise zu einem hohen Anteil tatsächlich miteinander in Kontakt stehender Flächenanteile der aneinander befestigten Bau- bzw. Verschleißteile und damit zu einer über die Kontaktflächen gleichmässig verteilte hohe Flächenpressung bei. Dies wiederum führt zu einer günstigen Wärme- - und soweit, auch - Stromübertragung und damit zu einer' Verringerung der aus der Prozeßwärme sowie aus der Stromübertragung resultierenden thermischen Belastung des jeweiligen Verschleißteils. Neben einer Gewährleistung einer hohen Prozeßsicherheit kann hierdurch auch die Standzeit des jeweiligen Verschleißteils länger als bei vorbekannten Lösungen ausfallen.

Obwohl die erfindungsgemäße Maßnahme, nämlich zumindest zwei konische Abschnitte vorzusehen, von denen einer ein Gewinde trägt und der andere eine im wesentlichen glatte Oberfläche aufweist, für sämtliche im Endbereich eines Lichtbogen-Schweißbrenners sich befindende Bauteile von Vorteil ist, hat diese Maßnahme für die sogenannte Kontaktdüse 10 besondere Bedeutung. Die Kontaktdüse, durch welche bei den MIG/MAG-Schweißverfahren der Schweißdraht geführt und der Schweißstelle zugeführt wird, unterliegt besonderen thermischen Belastungen und daher auch potentiell einem hohen Verschleiß und einer erhöhten Gefahr von verschleißbedingten Funktionsstörungen, im Vergleich zu den anderen Bauteilen im Endbereich des Brennerhalses.

**Bezugszeichenliste**

| | | | |
|---|---|---|---|
| 1 | Lichtbogen-Schweißbrenner | 18 | Auslaßausnehmung |
| 1a | freies Ende | 20 | erster Abschnitt |
| 2 | Innenrohr | 21 | zweiter Abschnitt |
| 2a | Ende | 22 | Innengewinde |
| 2c | Durchgangsausnehmung | 23 | glatte Oberfläche |
| 2b | Innenwand | 24 | Absatz |
| 2d | Endstück | 27 | Flankenfläche |
| 2e | Längsachse | 27a | Flankenfläche |
| 3 | Stromanschlußstelle | 28 | Flankenfläche |
| 5 | Brennerhals | 28a | Flankenfläche |
| 6 | Außenrohr | 29 | Gewindegrund |
| 7 | Schweißdraht | 30 | Längsachse |
| 8a | Seele | 31 | Endstück |
| 8b | Isolierung | 32 | erster Abschnitt mit Außen-gewinde |
| 9 | Düsenstock | | |
| 9a | Ende | 33 | zweiter Abschnitt |
| 9b | Ende | 34 | Außengewinde |
| 9d | Außenfläche | 35 | Isolierelement |
| 10 | Kontaktdüse | 36 | Isolierelement |
| 10a | Ende | 37 | zylindrischer Abschnitt |
| 10b | Ende | 39 | Endstück |
| 11 | Gasdüse | 40 | erster Abschnitt |
| 11a | Ende | 41 | zweiter Abschnitt |
| 11b | Ende | 42 | Innengewinde |
| 11c | Innenseite | 43 | Längsachse |
| 11d | Außenfläche | 44 | Durchgangsbohrung Kontakt-düse |
| 12 | Gasauslaß | | |
| 13 | Flansch | 46 | Mantelfläche |
| 14 | Hinterschneidung | 47 | Endstück |
| 16 | Durchgangsausnehmung | 48 | erster Abschnitt |
| 17 | Einlaß | 49 | zweiter Abschnitt |
| 50 | Außengewinde | 64 | erster Abschnitt |
| 52 | Freistich | 65 | zweiter Abschnitt |
| 53 | zylindrischer Abschnitt | 66 | Außengewinde |
| 54 | Schlüsselfläche | 67 | |
| 55 | Schlüsselfläche | | |
| 56 | Längsachse Gasdüse | | |
| 58 | Endstück | | |
| 59 | erster Abschnitt | | |
| 60 | zweiter Abschnitt | | |
| 61 | Innengewinde | | |
| 62 | | | |
| 63 | Endstück | | |

## Patentansprüche

1. Austauschbares Verschleißteil für einen Lichtbogen-Schweißbrenners (1),
nämlich Düsenstock (9) oder Kontaktdüse (10) oder Gasdüse (11), das zur Anordnung im Bereich eines zur Ausführung eines Schweißprozeßes vorgesehenen Endes (1a) des Lichtbogen-Schweißbrenners (1) bestimmt ist,
das Verschleißteil auf einer äußeren Mantelfläche (11d, 46) und/oder an einer Begrenzungswand einer Ausnehmung mit einem Gewinde (22, 34, 42, 61, 66) versehen ist, wobei in Richtung einer Längsachse (2e, 30, 43, 56) des Verschleißteils auf einen ersten, das zur Befestigung des Verschleißteil vorgesehene Gewinde (22, 34, 42, 50, 61, 66) aufweisenden, konusförmigen Abschnitt (40, 41, 48, 49) der Mantelfläche (11d, 46) oder der Begrenzungswand, auf oder an der gleichen Mantelfläche (11d, 46) oder Begrenzungswand ein gewindefreier zweiter konusförmiger Abschnitt der Mantelfläche (11d, 46) oder der Begrenzungswand nachfolgt,
**gekennzeichnet durch** einen gewindefreien zylindrischen Abschnitt (37, 53) mit konstantem Durchmesser der Mantelfläche (11d, 46) oder der Begrenzungswand, der sich vorzugsweise in Richtung der Längsachse (2e, 30, 43, 56) an den konusförmigen gewindefreien Abschnitt (40, 41, 48, 49) der Mantelfläche (11d, 46) oder der Begrenzungswand des Verschleißteils anschließt, so daß sich der gewindefreie konusförmige Abschnitt (40, 41, 48, 49) zwischen dem mit dem Gewinde (22, 34, 42, 61, 66) versehenen konusförmigen Abschnitt (40, 41, 48, 49) und dem zylindrischen Abschnitt (37, 53) befindet.

2. Verschleißteil nach Anspruch 1, **dadurch gekennzeichnet, daß** sowohl Durchmesser des ersten als auch Durchmesser des zweiten Abschnitts (20, 21, 32, 33, 40, 41, 48, 49, 59, 60, 64, 65) sich in eine gleiche Richtung der Längsachse (2e, 30, 43, 56) vergrößern.

3. Verschleißteil nach einem der vorhergehenden Ansprüche, wobei sowohl der erste als auch der zweite Abschnitt Bestandteil eines gleichen Endstücks (31, 39, 47, 58, 59) der Mantelfläche (11d, 46) oder Begrenzungswand sind.

4. Verschleißteil nach einem der vorhergehenden Ansprüche, **dadurch gekennzeichnet, daß** im Verschleißteil eine zentrische Ausnehmung zur Anordnung eines weiteren austauschbaren Verschleißteils und/oder zur Aufnahme einer Elektrode und/oder zur Durchleitung von Schutzgas vorgesehen ist, wobei die zentrische Ausnehmung von der Begrenzungswand begrenzt wird und den ersten und den zweiten konusförmigen Abschnitt (20, 21, 32, 33, 40, 41, 48, 49, 59, 60, 64, 65) aufweist.

5. Verschleißteil nach einem der vorhergehenden Ansprüche, **dadurch gekennzeichnet, daß** zwischen dem ersten und dem zweiten konusförmigen Abschnitt (20, 21, 32, 33, 40, 41, 48, 49, 59, 60, 64, 65) ein Gewindefreistich (52) mit einem in Bezug auf den gewindefreien konusförmigen Abschnitt (21, 33, 41, 49, 60, 65) geringeren Durchmesser vorgesehen ist.

6. Verschleißteil nach einem der vorhergehenden Ansprüche, **dadurch gekennzeichnet, daß** die beiden konusförmigen Abschnitte (20, 21, 32, 33, 40, 41, 48, 49, 59, 60, 64, 65) zumindest im wesentlichen den gleichen Konuswinkel, insbesondere einen über ihre gesamte Längserstreckung konstant gleichen, Konuswinkel, aufweisen.

7. Verschleißteil nach einem der vorhergehenden Ansprüche
**gekennzeichnet durch** einen Konuswinkel aus einem Bereich von 5° bis 15° gewählt sind.

8. Verschleißteil nach einem der vorhergehenden Ansprüche, **dadurch**
**gekennzeichnet, daß** das Gewinde (22, 34, 42, 50, 61, 66) des kegel- bzw. konusförmigen Abschnitts (20, 32, 40, 48, 59, 64) als Trapezgewinde ausgebildet ist, zumindest jedoch einen als Trapezgewinde ausgebildeten Gewindeabschnitt aufweist.

9. Verschleißteil nach Anspruch 8, **dadurch gekennzeichnet, daß** das
Trapezgewinde als Außengewinde ein Verhältnis aus einer Fußbreite der Nut des Gewindes zu einer Kopfbreite des Gewindezahns kleiner 1, und bei einem Innengewinde ein Verhältnis einer Fußbreite der Nut des Gewindes zu einer Kopfbreite des Gewindezahns größer 1 aufweist.

10. Verschleißteil nach einem der vorhergehenden Ansprüche
**gekennzeichnet durch** eine Steigung des Gewindes aus einem Bereich von 5° bis 15° vorgesehen ist.

11. Verschleißteil nach einem der vorhergehenden Ansprüche
**gekennzeichnet durch** zumindest zwei Endstücke, von denen das eine an einer äußeren Mantelfläche des Verschleißteils und das andere an einer Begrenzungswand einer Ausnehmung des Verschleißteils ausgebildet ist, wobei beide Endstücke jeweils mit dem zur Befestigung des Verschleißteils vorgesehenen, das Gewinde (22, 34, 42, 50, 61, 66) aufweisenden, konusförmigen Abschnitt (20, 32, 40, 48, 59, 64) und den gewindefreien zweiten konusförmigen Abschnitt (21, 33, 41, 49, 60, 65) der Mantelfläche oder der Begrenzungswand versehen sind.

12. Halterung für einen Lichtbogen-Schweißbrenners zur Aufnahme eines austauschbaren Verschleißteils, nämlich Düsenstock (9) oder Kontaktdüse (10) oder Gasdüse (11), die auf einer äußeren Mantelfläche oder an einer Begrenzungswand einer Ausnehmung mit einem Gewinde (22, 34, 42, 61, 66) versehen ist, zwei konusförmige Abschnitte (20, 21, 32, 33, 40, 41, 48, 49, 59, 60, 64, 65) der gleichen äußeren Mantelfläche oder der gleichen Begrenzungswand einer Ausnehmung aufweist, wobei ein erster konusförmiger Abschnitt (20, 32, 40, 48, 59, 64) mit dem Gewinde (22, 34, 42, 61, 66) versehen ist, welchem in einer axialen Längsrichtung des ersten Abschnitts ein gewindefreier zweiter konusförmiger Abschnitt (21, 33, 41, 49, 60, 65) nachfolgt, **gekennzeichnet durch** einen gewindefreien zylindrischen Abschnitt (37, 53) mit konstantem Durchmesser der Mantelfläche oder der Begrenzungswand, der sich vorzugsweise in Richtung der Längsachse (2e, 30, 43, 56) an den zweiten konusförmigen gewindefreien Abschnitt (21, 33, 41, 49, 60, 65) der Mantelfläche oder der Begrenzungswand des Verschleißteils anschließt, so daß sich der gewindefreie konusförmige Abschnitt (21, 33, 41, 49, 60, 65) zwischen dem mit dem Gewinde (22, 34, 42, 61, 66) versehenen ersten konusförmigen Abschnitt (20, 32, 40, 48, 59, 64) und dem zylindrischen Abschnitt (37, 53) befindet.

13. Halterungssystem für ein Verschleißteil eines Lichtbogen-Schweißbrenners (1), umfassend ein Verschleißteil eines Lichtbogen-Schweißbrenners, nämlich Düsenstock (9) oder Kontaktdüse (10) oder Gasdüse (11), das zur Anordnung im Bereich eines einen Schweißprozeß ausführenden Endes des Lichtbogen-Schweißbrenners (1) vorgesehen ist, sowie eine Halterung zur lösbaren Befestigung des Verschleißteils an einem Gewinde (22, 34, 42, 61, 66), das im oder am Schweißbrenner (1) angeordnet sein kann, und an einem konus- bzw. kegelförmigen Abschnitt (20, 32, 40, 48, 59, 64) der Halterung angeordnet ist, **gekennzeichnet durch** das nach einem der Ansprüche 1 bis 11 ausgebildete Verschleißteil, wobei sowohl das Gewinde der Halterung mit einem Gewinde des Verschleißteils zur Erzeugung einer Schraubverbindung zwischen der Halterung und dem Verschleißteil, als auch ein konus- bzw. kegelförmiger Abschnitt der Halterung mit dem konus- bzw. kegelförmigen Abschnitt des Verschleißteils zur gegenseitigen flächigen Anlage, korrespondiert.

14. Halterungssystem nach Anspruch 13, **gekennzeichnet durch** den gewindefreien Abschnitt der Halterung für das Verschleißteil, insbesondere eine Kontaktdüse (10), der sich in axialer Richtung zwischen dem Gewinde und einer Öffnung der Ausnehmung befindet, durch welche das Verschleißteil zur Befestigung an der Halterung einführbar ist.

15. Halterungssystem nach einem der Ansprüche 13 oder 14, **dadurch**
**gekennzeichnet, daß** die mit zumindest zwei kegelförmigen Abschnitten (20, 21, 32, 33, 40, 41, 48, 49, 59, 60, 64, 65) versehene Halterung Bestandteil, insbesondere einstückiger Bestandteil, eines im Inneren des Schutzgas-Schweißbrenners angeordneten Bauteils, insbesondere eines Düsenstocks (9), ist.

16. Halterungssystem nach einem der vorhergehenden Ansprüche 13 bis 15, **dadurch gekennzeichnet, daß** die, insbesondere als Düsenstock (9) ausgebildete, Halterung entlang einer Längsachse (2e, 30, 43, 56) mit einer an ihren beiden stirnseitigen Enden (9a, 9b) offenen Durchgangsausnehmung versehen ist, eine konusförmige Ausnehmung mit dem ersten gewindebehafteten konusförmigen Abschnitt und dem zweiten gewindefreien konusförmigen Abschnitt (21, 33, 41, 49, 60, 65) Bestandteil der Durchgangsausnehmung der Halterung ist und die Halterung zudem mit zumindest einer von der Durchgangsausnehmung durch eine Wand der Halterung, insbesondere radial, verlaufende Gasaustrittsöffnung versehen ist.

17. Halterungssystem nach einem der vorhergehenden Ansprüche 13 bis 16, **gekennzeichnet durch** einen Steigungswinkel des Gewindes (22, 34, 42, 61, 66) und/oder einem Konus- bzw Kegelwinkel des Verschleißteils und der Halterung, durch die zwischen dem Verschleißteil und der Halterung Selbsthemmung gegeben ist.

18. Halterungssystem nach einem der vorhergehenden Ansprüche 13 bis 17, **gekennzeichnet durch** einen gewindefreien zylindrischen Abschnitt (37, 53) mit konstantem Durchmesser der Mantelfläche (11d, 46) oder der Begrenzungswand der Halterung und/oder des Verschleißteils, der sich vorzugsweise in Richtung der Längsachse (2e, 30, 43, 56) an den konusförmigen gewindefreien Abschnitt (21, 33, 41, 49, 60, 65) der Mantelfläche (11d, 46) oder der Begrenzungswand des Verschleißteils und/oder der Halterung anschließt, so daß sich der gewindefreie konusförmige Abschnitt (21, 33, 41, 49, 60, 65) zwischen dem mit dem Gewinde versehenen konusförmigen Abschnitt (20, 32, 40, 48, 59, 64) und dem zylindrischen Abschnitt (37, 53) des Verschleißteils und/oder der Halterung befindet.

19. Düsenstock-Kontaktdüsensystem für einen Schutzgas-Schweißbrenner, bei dem der Düsenstock (9) zur lösbaren Befestigung in einem Innenrohr (2) des Schutzgas-Schweißbrenners vorgesehen ist, wobei der Düsenstück (9) entlang einer Längsachse (2e, 30, 43, 56) mit einer an seiner beiden stirnseitigen Enden (9a, 9b) offenen Durchgangsausnehmung (16, 44) versehen ist, der Düsenstock (9) ferner im Bereich seines ersten stirnseitigen Endes (9a) ein Verbindungsmittel zur lösbaren Befestigung am Innenrohr (2) des Schutzgas-Schweißbrenners aufweist, und an einem zweiten, einem offenen Ende des Schutzgas-Schweißbrenners zugewandten, Ende (9b) mit einer konusförmigen Ausnehmung versehen ist, die ein Innengewinde (42) aufweist, **gekennzeichnet durch** eine Kontaktdüse (10), die nach einem der vorhergehenden Ansprüche 1 bis 11 ausgebildet ist, wobei das Innengewinde (42) des Düsenstocks (9) mit dem Außengewinde (50) der Kontaktdüse (10) zur Erzeugung einer Schraubverbindung zwischen dem Düsenstock (9) und der Kontaktdüse (10) korrespondiert.

20. Lichtbogen-Schweißbrenner, insbesondere für einen Schweißautomaten, der mit einer abschmelzenden oder einer nicht-abschmelzenden Elektrode sowie mit einer austauschbaren Kontaktdüse (10) als Halteelement für die Elektrode versehen ist, **gekennzeichnet durch** eine Kontaktdüse (10) nach einem der vorhergehenden Ansprüche 1 bis 11.

21. Lichtbogen-Schweißbrenner, insbesondere für einen Schweißautomaten, der mit einer abschmelzenden oder einer nicht-abschmelzenden Elektrode sowie mit einer als austauschbares Verschleißteil ausgebildeten Kontaktdüse (10) versehen ist, zudem ein Außenrohr (6) und/oder ein Innenrohr (2) aufweist, das jeweils als Halterung für ein schweißbrennerendseitiges austauschbares weiteres Verschleißteil, nämlich Düsenstock (9) oder Gasdüse (11), vorgesehen und mit einem Endstück einer äußeren Mantelfläche (11d, 46) oder einer Begrenzungswand einer Ausnehmung versehen ist, **dadurch gekennzeichnet, daß**
in Richtung einer Längsachse (2e, 30, 43, 56) auf einen ersten, ein zur Befestigung des jeweiligen Verschleißteils vorgesehenes Gewinde aufweisenden, konusförmigen Abschnitt (20, 32, 40, 48, 59, 64) des Endstücks der Mantelfläche (11d, 46) oder der Begrenzungswand, auf oder an der gleichen Mantelfläche (11d, 46) oder Begrenzungswand ein gewindefreier zweiter konusförmiger Abschnitt (21, 33, 41, 49, 60, 65) des Endstücks der Mantelfläche (11d, 46) oder der Begrenzungswand nachfolgt, an den sich wiederum ein gewindefreier zylindrischer Abschnitt (37, 53) mit konstantem Durchmesser der Mantelfläche (11d, 46) oder der Begrenzungswand in Richtung der Längsachse (2e, 30, 43, 56) anschließt.

## Claims

1. An exchangeable wearing part for an arc welding torch (1), namely a nozzle holder (9) or contact nozzle (10) or gas nozzle (11), which is intended to be arranged in the region of an end (1a) of the arc welding torch (1) provided for carrying out a welding process, the wearing part being provided with a thread (22, 34, 42, 61, 66) on an outer lateral surface (11d, 46) and/or on a boundary wall of a recess, wherein, in the direction of a longitudinal axis (2e, 30, 43, 56) of the wearing part, a first conical portion (40, 41, 48, 49), having the thread (22, 34, 42, 50, 61, 66) provided for fastening the wearing part, of the lateral surface (11d, 46) or of the boundary wall is followed on or at the same lateral surface (11d, 46) or boundary wall by a thread-free second conical portion of the lateral surface (11d, 46) or of the boundary wall,
**characterized by** a thread-free cylindrical portion (37, 53) of constant diameter of the lateral surface (11d, 46) or of the boundary wall, which cylindrical portion preferably adjoins the conical thread-free portion (40, 41, 48, 49) of the lateral surface (11d, 46) or the boundary wall of the wearing part in the direction of the longitudinal axis (2e, 30, 43, 56) such that the thread-free conical portion (40, 41, 48, 49) is located between the conical portion (40, 41, 48, 49) provided with the thread (22, 34, 42, 61, 66) and the cylindrical portion (37, 53).

2. The wearing part according to claim 1, **characterized in that** diameters of the first portion as well as diameters of the second portion (20, 21, 32, 33, 40, 41, 48, 49, 59, 60, 64, 65) increase in a same direction of the longitudinal axis (2e, 30, 43, 56).

3. The wearing part according to one of the preceding claims, wherein both the first and the second portion are part of a same end piece (31, 39, 47, 58, 59) of the lateral surface (11 d, 46) or boundary wall.

4. The wearing part according to one of the preceding claims, **characterized in that** a centric recess for the arrangement of a further exchangeable wearing part and/or for receiving an electrode and/or for the passage of inert gas is provided in the wearing part, wherein the centric recess is bounded by the boundary wall and has the first and the second conical portions (20, 21, 32, 33, 40, 41, 48, 49, 59, 60, 64, 65).

5. The wearing part according to one of the preceding claims, **characterized in that** a thread undercut (52) having a smaller diameter with respect to the thread-free conical portion (21, 33, 41, 49, 60, 65) is provided between the first and second conical portions (20, 21, 32, 33, 40, 41, 48, 49, 59, 60, 64, 65).

6. The wearing part according to one of the preceding claims, **characterized in that** the two conical portions (20, 21, 32, 33, 40, 41, 48, 49, 59, 60, 64, 65) have at least substantially the same cone angle, in particular a cone angle which is consistently the same over their entire longitudinal extent.

7. The wearing part according to one of the preceding claims, **characterized by** a cone angle selected from a range of 5° to 15°.

8. The wearing part according to one of the preceding claims, **characterized in that** the thread (22, 34, 42, 50, 61, 66) of the tapered or conical portion (20, 32, 40, 48, 59, 64) is formed as a trapezoidal thread, or at least has a threaded portion formed as a trapezoidal thread.

9. The wearing part according to claim 8, **characterized in that** the trapezoidal thread as an external thread has a ratio of a root width of the groove of the thread to a head width of the thread tooth smaller than 1, and in the case of an internal thread has a ratio of a root width of the groove of the thread to a head width of the thread tooth greater than 1.

10. The wearing part according to one of the preceding claims, **characterized by** a pitch of the thread being provided from a range of 5° to 15°.

11. The wearing part according to one of the preceding claims, **characterized by** at least two end pieces, one of which is formed on an outer lateral surface of the wearing part and the other one is formed on a boundary wall of a recess of the wearing part, wherein both end pieces are each provided with the conical portion (20, 32, 40, 48, 59, 64) having the thread (22, 34, 42, 50, 61, 66) provided for fastening the wearing part and with the thread-free second conical portion (21, 33, 41, 49, 60, 65) of the lateral surface or the boundary wall.

12. A holder for an arc welding torch for receiving an exchangeable wearing part, namely a nozzle holder (9) or a contact nozzle (10) or a gas nozzle (11), which is provided with a thread (22, 34, 42, 61, 66) on an outer lateral surface or on a boundary wall of a recess, having two conical portions (20, 21, 32, 33, 40, 41, 48, 49, 59, 60, 64, 65) of the same outer lateral surface or the same boundary wall of a recess, wherein a first conical portion (20, 32, 40, 48, 59, 64) is provided with the thread (22, 34, 42, 61, 66) which, in an axial longitudinal direction of the first portion, is followed by a thread-free second conical portion (21, 33, 41, 49, 60, 65), **characterized by** a thread-free cylindrical portion (37, 53) of constant diameter of the lateral surface or the boundary wall which preferably adjoins the second conical thread-free portion (21, 33, 41, 49, 60, 65) of the lateral surface or the boundary wall of the wearing part in the direction of the longitudinal axis (2e, 30, 43, 56) such that the thread-free conical portion (21, 33, 41, 49, 60, 65) is located between the first conical portion (20, 32, 40, 48, 59, 64) provided with the thread (22, 34, 42, 42) and the cylindrical portion (37, 53).

13. A holder system for a wearing part of an arc welding torch (1), comprising a wearing part of an arc welding torch, namely nozzle holder (9) or contact nozzle (10) or gas nozzle (11), which is provided for arrangement in the region of an end of the arc welding torch (1) carrying out a welding process, and a holder for detachably fastening the wearing part to a thread (22, 34, 42, 61, 66) which is arranged in or on the arc welding torch (1)and on a conical or tapered portion (20, 32, 40, 48, 59, 64) of the holder, **characterized by** the wearing part formed according to one of claims 1 to 11, wherein both the thread of the holder corresponds with a thread of the wearing part for producing a screw connection between the holder and the wearing part, and a conical or tapered portion of the holder corresponds with the conical or tapered portion of the wearing part for mutual surface contact.

14. The holder system according to claim 13, **characterized by** the thread-free portion of the holder for the wearing part, in particular a contact nozzle (10), which portion is located in the axial direction between the thread and an opening of the recess through which the wearing part can be inserted for fastening to the holder.

15. The holder system according to any one of claims 13 or 14, **characterized in that** the holder provided with at least two conical portions (20, 21, 32, 33, 40, 41, 48, 49, 59, 60, 64, 65) is part, in particular integral part, of a component, in particular of a nozzle holder (9), arranged inside the inert gas welding torch.

16. The holder system according to any one of the preceding claims 13 to 15, **characterized in that** the holder, in particular formed as a nozzle holder (9), is provided along a longitudinal axis (2e, 30, 43, 56) with a through-recess open at its two front ends (9a, 9b), a conical recess with the first threaded conical portion and the second thread-free conical portion (21, 33, 41, 49, 60, 65) is part of the through-recess of the holder, and the holder is also provided with at least one gas outlet opening running, in particular radially, from the through-recess through a wall of the holder.

17. The holder system according to any one of the preceding claims 13 to 16, **characterized by** a pitch angle of the thread (22, 34, 42, 61, 66) and/or a cone or taper angle of the wearing part and the holder, by means of which self-locking is provided between the wearing part and the holder.

18. The holder system according to any one of the preceding claims 13 to 17, **characterized by** a thread-free cylindrical portion (37, 53) of constant diameter of the lateral surface (11d, 46) or the boundary wall of the holder and/or the wearing part, which preferably adjoins the conical thread-free portion (21, 33, 41, 49, 60, 65) of the lateral surface (11d, 46) or the boundary wall of the wearing part and/or the holder in the direction of the longitudinal axis (2e, 30, 43, 56) such that the thread-free conical portion (21, 33, 41, 49, 60, 65) is located between the conical portion (20, 32, 40, 48, 59, 64) provided with the thread and the cylindrical portion (37, 53) of the wearing part and/or the holder.

19. Nozzle holder-contact nozzle system for an inert gas welding torch in which the nozzle holder (9) is provided for detachably fastening in an inner tube (2) of the inert gas welding torch, wherein the nozzle holder (9) is provided along a longitudinal axis (2e, 30, 43, 56) with a through-recess (16, 44) open at its two front ends (9a, 9b), wherein the nozzle holder (9), in the region of its first front end (9a), further has a connecting means for detachably fastening to the inner tube (2) of the inert gas welding torch and, at a second end (9b) facing an open end of the inert gas welding torch, is provided with a conical recess which has an internal thread (42), **characterized by** a contact nozzle (10) which is formed according to any one of the preceding claims 1 to 11, wherein the internal thread (42) of the nozzle holder (9) corresponds with the external thread (50) of the contact nozzle (10) for producing a screw connection between the nozzle holder (9) and the contact nozzle (10).

20. An arc welding torch, in particular for an automatic welding machine, which is provided with a consumable or a non-consumable electrode as well as with an exchangeable contact nozzle (10) as a holding element for the electrode, **characterized by** a contact nozzle (10) according to any one of the preceding claims 1 to 11.

21. The arc welding torch, in particular for an automatic welding machine, which is provided with a consumable or a non-consumable electrode as well as with a contact nozzle (10) formed as an exchangeable wearing part, further having an outer tube (6) and/or an inner tube (2) which is provided in each case as a holder for an exchangeable further wearing part at the welding torch end, namely a nozzle holder (9) or gas nozzle (11), and is provided with an end piece of an outer lateral surface (11d, 46) or of a boundary wall of a recess, **characterized in that**
in the direction of a longitudinal axis (2e, 30, 43, 56), a first conical portion (20, 32, 40, 48, 59, 64) of the end piece of the lateral surface (11d, 46) or of the boundary wall, which portion has a thread provided for fastening the respective wearing part, is followed on or at the same lateral surface (11d, 46) or boundary wall by a thread-free second conical portion (21, 33, 41, 49, 60, 65) of the end piece of the lateral surface (11d, 46) or of the boundary wall, which in turn is adjoined in the direction of the longitudinal axis (2e, 30, 43, 56) by a thread-free cylindrical portion (37, 53) of constant diameter of the lateral surface (11d, 46) or of the boundary wall.

## Revendications

1. Pièce d'usure échangeable pour un chalumeau de soudage à l'arc (1), à savoir un raccord de buse (9) ou une buse de contact (10) ou une buse à gaz (11), qui est conçue pour la mise en place dans la zone d'une extrémité (1a) du chalumeau de soudage à l'arc (1), prévue pour l'exécution d'un processus de soudure, la pièce d'usure est dotée sur une surface d'enveloppe extérieure (11d, 46) et/ou sur une paroi de délimitation d'un évidement avec un filetage (22, 34, 42, 61, 66), sachant que dans la direction d'un axe longitudinal (2e, 30, 43, 56) de la pièce d'usure, une deuxième section conique non filetée de la surface d'enveloppe (11d, 46) ou de la paroi de délimitation fait suite à une première section (40, 41, 48, 49) conique comportant le filetage (22, 34, 42, 50, 61, 66) prévu pour la fixation de la pièce d'usure de la surface d'enveloppe (11d, 46) ou de la paroi de délimitation, sur ou près de la même surface d'enveloppe (11d, 46) ou de la paroi de délimitation,
**caractérisée par** une section (37, 53) cylindrique non filetée avec un diamètre constant de la surface d'enveloppe (11d, 46) ou de la paroi de délimitation, qui se raccorde de préférence en direction de l'axe longitudinal (2e, 30, 43, 56) à la section non filetée conique (40, 41, 48, 49) de la surface d'enveloppe (11d, 46) ou de la paroi de délimitation de la pièce d'usure de telle sorte que la section conique non filetée (40, 41, 48, 49) se trouve entre la section conique(40, 41, 48, 49) dotée du filetage (22, 34, 42, 61, 66) et la section cylindrique (37, 53).

2. Pièce d'usure selon la revendication 1, **caractérisée en ce que** tant le diamètre de la première que le diamètre de la deuxième section (20, 21, 32, 33, 40, 41, 48, 49, 59, 60, 64, 65) augmentent dans une même direction de l'axe longitudinal (2e, 30, 43, 56).

3. Pièce d'usure selon l'une quelconque des revendications précédentes, sachant que tant la première que la deuxième section font partie intégrante d'un même embout (31, 39, 47, 58, 59) de la surface d'enveloppe (11d, 46) ou de la paroi de délimitation.

4. Pièce d'usure selon l'une quelconque des revendications précédentes, **caractérisée en ce qu'**un évidement central est prévu dans la pièce d'usure pour la mise en place d'une autre pièce d'usure échangeable et/ou pour loger une électrode et/ou pour faire passer du gaz inerte, sachant que l'évidement central est délimité par la paroi de délimitation et comporte la première et la deuxième section conique (20, 21, 32, 33, 40, 41, 48, 49, 59, 60, 64, 65) .

5. Pièce d'usure selon l'une quelconque des revendications précédentes, **caractérisée en ce qu'**une gorge de dégagement de filetage (52) avec un diamètre plus faible par rapport à la section conique non filetée (21, 33, 41, 49, 60, 65) est prévue entre la première et la deuxième section conique (20, 21, 32, 33, 40, 41, 48, 49, 59, 60, 64, 65) .

6. Pièce d'usure selon l'une quelconque des revendications précédentes, **caractérisée en ce que** les deux sections coniques (20, 21, 32, 33, 40, 41, 48, 49, 59, 60, 64, 65) comportent au moins pour l'essentiel la même conicité, en particulier une conicité identique constante sur toute leur extension longitudinale.

7. Pièce d'usure selon l'une quelconque des revendications précédentes, **caractérisée par** une conicité s'étalant sur une gamme de 5° à 15°.

8. Pièce d'usure selon l'une quelconque des revendications précédentes, **caractérisée en ce que** le filetage (22, 34, 42, 50, 61, 66) de la section en forme de cône ou conique (20, 32, 40, 48, 59, 64) est constitué sous la forme d'un filetage trapézoïdal, mais comporte au moins cependant une section filetée constituée sous la forme d'un filetage trapézoïdal.

9. Pièce d'usure selon la revendication 8, **caractérisée en ce que** le filetage trapézoïdal comporte en tant que filetage extérieur un rapport entre une largeur de base de la gorge de filetage et une largeur de tête de la dent de filetage, inférieur à 1, et pour un filetage intérieur, un rapport entre une largeur de base de la gorge du filetage et une largeur de tête de la dent de filetage, supérieur à 1.

10. Pièce d'usure selon l'une quelconque des revendications précédentes, **caractérisée en ce qu'**un pas de filetage s'étalant sur une gamme de 5° à 15° est prévu.

11. Pièce d'usure selon l'une quelconque des revendications précédentes, **caractérisée par** au moins deux embouts, dont l'un est constitué sur une surface d'enveloppe extérieure de la pièce d'usure et l'autre sur une paroi de délimitation d'un évidement de la pièce d'usure, sachant que les deux embouts sont dotés respectivement de la section conique (20, 32, 40, 48, 59, 64) comportant le filetage (22, 34, 42, 50, 61, 66) prévu pour la fixation de la pièce d'usure et la deuxième section conique non filetée (21, 33, 41, 49, 60, 65) de la surface d'enveloppe ou de la paroi de délimitation.

12. Fixation pour un chalumeau de soudage à l'arc pour loger une pièce d'usure échangeable, à savoir un raccord de buse (9) ou buse de contact (10) ou buse à gaz (11), qui est dotée sur une surface d'enveloppe extérieure ou une paroi de délimitation d'un évidement avec un filetage (22, 34, 42, 61, 66), comporte deux sections coniques (20, 21, 32, 33, 40, 41, 48, 49, 59, 60, 64, 65) de la surface d'enveloppe extérieure identique ou de la même paroi de délimitation d'un évidement, sachant qu'une première section conique (20, 32, 40, 48, 59, 64) est dotée du filetage (22, 34, 42, 61, 66), auquel fait suite une deuxième section conique non filetée (21, 33, 41, 49, 60, 65) dans une direction longitudinale axiale de la première section, **caractérisée par** une section cylindrique non filetée (37, 53) avec un diamètre constant de la surface d'enveloppe ou de la paroi de délimitation, qui se raccorde de préférence en direction de l'axe longitudinal (2e, 30, 43, 56) à la deuxième section conique non filetée (21, 33, 41, 49, 60, 65) de la surface d'enveloppe ou de la paroi de délimitation de la pièce d'usure de telle sorte que la section conique non filetée (21, 33, 41, 49, 60, 65) se trouve entre la première section conique (20, 32, 40, 48, 59, 64) dotée du filetage (22, 34, 42, 61, 66) et la section cylindrique (37, 53).

13. Système de fixation pour une pièce d'usure d'un chalumeau de soudage à l'arc (1), comprenant une pièce d'usure d'un chalumeau de soudage à l'arc, à savoir un raccord de buse (9) ou buse de contact (10) ou buse à gaz (11), qui est prévue pour la mise en place dans la zone d'une extrémité exécutant un processus de soudage du chalumeau de soudage à l'arc (1) ainsi qu'une fixation disposée dans ou sur le chalumeau de soudage à l'arc (1) pour la fixation amovible de la pièce d'usure à un filetage (22, 34, 42, 61, 66), qui est disposé sur une section conique ou en forme de cône (20, 32, 40, 48, 59, 64) de la fixation, **caractérisé par** la pièce d'usure constituée selon l'une quelconque des revendications 1 à 11, sachant que tout comme le filetage de la fixation correspond à un filetage de la pièce d'usure pour produire une liaison par vissage entre la fixation et la pièce d'usure, une section conique ou en forme de cône de la fixation correspond également à la section conique ou en forme de cône de la pièce d'usure pour un appui réciproque de surface.

14. Système de fixation selon la revendication 13, **caractérisé par** la section non filetée de la fixation pour la pièce d'usure, en particulier une buse de contact (10), qui se trouve en direction axiale entre le filetage et une ouverture de l'évidement, à travers lequel la pièce d'usure peut être introduite pour fixation au système de fixation.

15. Système de fixation selon l'une quelconque des revendications 13 ou 14, **caractérisé en ce que** la fixation dotée d'au moins deux sections coniques (20, 21, 32, 33, 40, 41, 48, 49, 59, 60, 64, 65) fait partie intégrante en particulier partie intégrante en une seule pièce, d'un composant disposé à l'intérieur du chalumeau à gaz inerte, en particulier d'un raccord de buse (9).

16. Système de fixation selon l'une quelconque des revendications précédentes 13 à 15, **caractérisé en ce que** la fixation, en particulier constituée comme un raccord de buse (9), est dotée le long d'un axe longitudinal (2e, 30, 43, 56) d'un évidement de passage ouvert à ses deux extrémités frontales (9a, 9b) un évidement conique fait partie intégrante de l'évidement de passage de la fixation avec la première section conique dotée d'un filetage et la deuxième section conique non filetée (21, 33, 41, 49, 60, 65) et la fixation est dotée en plus d'au moins une ouverture de sortie de gaz passant en particulier radialement de l'évidement de passage à travers une paroi de la fixation.

17. Système de fixation selon l'une quelconque des revendications précédentes 13 à 16, **caractérisé par** un angle de pas du filetage (22, 34, 42, 61, 66) et/ou un angle de cône ou une conicité de la pièce d'usure et de la fixation, par lequel le blocage automatique est réalisé entre la pièce d'usure et la fixation.

18. Système de fixation selon l'une quelconque des revendications précédentes 13 à 17, **caractérisé par** une section cylindrique non filetée (37, 53) avec un diamètre constant de la surface d'enveloppe (11d, 46) ou de la paroi de délimitation de la fixation et/ou de la pièce d'usure, qui se raccorde de préférence en direction de l'axe longitudinal (2e, 30, 43, 56) à la section conique non filetée (21, 33, 41, 49, 60, 65) de la surface d'enveloppe (11d, 46) ou de la paroi de délimitation de la pièce d'usure et/ou de la fixation de telle sorte que la section conique non filetée (21, 33, 41, 49, 60, 65) se trouve entre la section conique dotée du filetage (20, 32, 40, 48, 59, 64) et la section cylindrique (37, 53) de la pièce d'usure et/ou de la fixation.

19. Système raccord de buse - buse de de contact pour un chalumeau à gaz inerte pour lequel le raccord de buse (9) est prévu pour la fixation amovible dans un tube intérieur (2) du chalumeau à gaz inerte, sachant que le raccord de buse (9) est doté le long d'un axe longitudinal (2e, 30, 43, 56) d'un évidement de passage (16, 44) ouvert à ses deux extrémités frontales (9a, 9b), le raccord de buse (9) comporte en plus dans la zone de sa première extrémité frontale (9a) un moyen de liaison pour la fixation amovible sur le tube intérieur (2) du chalumeau à gaz inerte et est doté sur une deuxième extrémité (9b) tournée vers une extrémité ouverte du chalumeau à gaz inerte, d'un évidement conique, qui comporte un filetage intérieur (42), **caractérisé par** une buse de contact (10), qui est constituée selon l'une quelconque des revendications précédentes 1 à 11, sachant que le filetage intérieur (42) du raccord de buse (9) correspond au filetage extérieur (50) de la buse de contact (10) pour produire une liaison par vissage entre le raccord de buse (9) et la buse de contact (10).

20. Chalumeau de soudage à l'arc, en particulier pour un poste de soudage automatique, qui est doté d'une électrode fusible ou d'une électrode non fusible ainsi que d'une buse de contact (10) échangeable en tant qu'élément de fixation pour l'électrode, **caractérisé par** une buse de contact (10) selon l'une quelconque des revendications précédentes 1 à 11.

21. Chalumeau de soudage à l'arc, en particulier pour un poste de soudage automatique, qui est doté d'une électrode fusible ou d'une électrode non fusible, ainsi que d'une buse de contact (10) constituée comme pièce d'usure échangeable, qui comporte en plus un tube extérieur (6) et/ou un tube intérieur (2), qui est respectivement prévu comme fixation pour une autre pièce d'usure échangeable du côté chalumeau, à savoir un raccord de buse (9) ou une buse à gaz (11) et est doté d'un embout d'une surface d'enveloppe extérieure (11d, 46) ou d'une paroi de délimitation d'un évidement **caractérisé en ce que**
dans la direction d'un axe longitudinal (2e, 30, 43, 56), une deuxième section conique non filetée (21, 33, 41, 49, 60, 65) de l'embout de la surface d'enveloppe (11d, 46) ou de la paroi de délimitation, fait suite sur ou à la même surface d'enveloppe (11d, 46) ou paroi de délimitation, à une première section conique (20, 32, 40, 48, 59, 64) comportant un filetage prévu pour la fixation de la pièce d'usure respective, de l'embout de la surface d'enveloppe (11d, 46) ou de la paroi de délimitation, à laquelle se raccorde à nouveau en direction de l'axe longitudinal (2e, 30, 43, 56), une section cylindrique non filetée (37, 53) avec un diamètre constant de la surface d'enveloppe (11d, 46) ou de la paroi de délimitation.
